# EUROPÄISCHE PATENTSCHRIFT

(11) **EP 3 004 643 B1**
(45) Veröffentlichungstag und Bekanntmachung des Hinweises auf die Patenterteilung: **19.04.2017**
(21) Anmeldenummer: 14729630.5
(22) Anmeldetag: 03.06.2014
(51) Int. Cl.: F04B 9/109, B01F 15/04, F04B 9/111, F04B 9/113, F04B 13/00, F04B 13/02

(54) **DOSIERPUMPE UND DOSIERSYSTEM**
METERING PUMP AND METERING SYSTEM
POMPE DE DOSAGE ET SYSTÈME DE DOSAGE

(30) Priorität: 05.06.2013 EP 13170604
(43) Veröffentlichungstag der Anmeldung: 13.04.2016
(73) Patentinhaber: BASF SE, 67056 Ludwigshafen am Rhein (DE)
(72) Erfinder: WICHMANN, Wolf-Dieter, 17391 Neetzow (DE)
(86) Internationale Anmeldenummer: PCT/EP2014/061480
(87) Internationale Veröffentlichungsnummer: WO 2014/195312

(56) Entgegenhaltungen:
- DE-A1- 2 549 008
- FR-A1- 2 595 121
- US-A- 3 765 605
- US-A- 3 980 231
- US-A- 4 076 465

## Beschreibung

Die vorliegende Erfindung betrifft eine Dosierpumpe zum Fördern und Dosieren eines Fluids. Ferner betrifft die Erfindung ein Dosiersystem zum Mischen zweier Fluide und ein Dosiersystem zum Dosieren zumindest eines Fluids.

Es sind Kolbendosierpumpen unterschiedlicher Bauart bekannt, die über unterschiedliche Förderbereiche verfügen. Sie werden üblicherweise elektrisch oder pneumatisch angetrieben. Es gibt jedoch Einsatzgebiete bei denen kein pneumatischer oder elektrischer Antrieb eingesetzt werden kann, da beispielsweise kein Luftdruck für den pneumatischen Antrieb erzeugt werden kann und nicht ausreichend elektrische Energie für den elektrischen Antrieb der Dosierpumpe zur Verfügung steht.

Des Weiteren gibt es Anwendungsbereiche, insbesondere im landwirtschaftlichen Bereich beim Dosieren von Pflanzenschutzmitteln, bei denen eine sehr genaue Dosierung über einen sehr großen Förderbereich erforderlich ist. Mit herkömmlichen Dosierpumpen ist es zwar möglich, genau definierte Mengen zu Dosieren. Solche Dosierpumpen verfügen dann jedoch nur über einen sehr kleinen Bereich, in dem die Dosiermenge eingestellt werden kann. Andererseits gibt es Dosierpumpen, deren Dosiervolumina über einen sehr großen Bereich einstellbar sind. Die Genauigkeit, mit welcher die Dosierung dann erfolgt, ist jedoch gering.

Aus der FR 2 595 121 A1 ist eine Dosierpumpe nach dem jeweiligen Oberbegriff der Ansprüche 1 und 12 bekannt.

Aus der DE 25 49 008 ist eine Dosier- und Einspritzpumpe zum gesteuerten Zumischen einer Dosierflüssigkeit zu einer Nutzflüssigkeit bekannt.

Aus der US 3,765,605 A ist eine Vorrichtung zum Ausstoßen eines Flüssigkeitsgemisches bekannt, bei der zwei Komponenten miteinander gemischt und anschließend auf ein Substrat ausgestoßen werden.

Aus der US 4,076, 465 A ist ein Verdünner bekannt, mit dem zwei verschiedene Fluide in einem bestimmten Verhältnis ausgestoßen werden können.

Schließlich ist aus der US 3,980,231 A eine Sprühvorrichtung bekannt, bei der ein Insektizid mit Wasser gemischt und ausgestoßen werden kann.

Der vorliegenden Erfindung liegt daher die Aufgabe zugrunde, eine Dosierpumpe und ein Dosiersystem anzugeben, die flexibel einsetzbar sind und/oder mit denen eine sehr genaue Dosierung über einen großen einstellbaren Dosierbereich möglich ist.

Erfindungsgemäß wird diese Aufgabe gemäß einem ersten Aspekt der Erfindung von einer Dosierpumpe mit den Merkmalen des Anspruchs 1 und von einem Dosiersystem mit den Merkmalen der Ansprüche 8 und 9 gelöst und gemäß einem zweiten Aspekt von einer Dosierpumpe mit den Merkmalen des Anspruchs 12 und von einem Dosiersystem mit den Merkmalen des Anspruchs 19 gelöst. Vorteilhafte Ausgestaltungen und Weiterbildungen ergeben sich dabei aus den abhängigen Ansprüchen.

Die erfindungsgemäße Dosierpumpe umfasst einen hydraulischen Antrieb zum Bereitstellen einer unter Druck stehenden Hydraulikflüssigkeit. Ferner weist die Dosierpumpe ein Gehäuse und einen Pendelkolben auf, der so in dem Gehäuse aufgenommen ist, dass zumindest eine erste und eine zweite Hydraulikkammer und eine erste und eine zweite Förderkammer gebildet sind. Des Weiteren weist die Dosierpumpe eine Einstelleinrichtung auf, die so mit dem Pendelkolben gekoppelt ist, dass die Bewegung des Pendelkolbens so begrenzbar ist, dass für zumindest eine der Förderkammern verschiedene Minimal- und/oder Maximalvolumina einstellbar sind. Der Pendelkolben weist dabei bei der ersten Hydraulikkammer zumindest eine erste Antriebsfläche und bei der zweiten Hydraulikkammer zumindest eine zweite Antriebsfläche auf. Die Hydraulikkammern kommunizieren mit dem hydraulischen Antrieb, so dass der Pendelkolben von der Hydraulikflüssigkeit zwischen einer ersten und einer zweiten Stellung hin und her bewegbar ist. Bei der Bewegung von der ersten in die zweite Stellung vergrößert sich das Volumen der ersten Förderkammer und verkleinert sich das Volumen der zweiten Förderkammer. Bei der Bewegung von der zweiten in die erste Stellung vergrößert sich hingegen das Volumen der zweiten Förderkammer und das Volumen der ersten Förderkammer verkleinert sich. Des Weiteren umfasst die Einstelleinrichtung zumindest einen Anschlagkolben, der den Raum der Förderkammer, die dem Anschlagkolben zugeordnet ist, begrenzt.

Die erfindungsgemäße Dosierpumpe kann vorteilhafterweise auch dann eingesetzt werden, wenn die Pumpe nicht mittels eines elektrischen oder eines pneumatischen Antriebs angetrieben werden kann. Die erfindungsgemäße Dosierpumpe kann beispielsweise auch auf einem Fahrzeug, einer Land- oder Baumaschine zur Dosierung flüssiger Medien eingesetzt werden, bei denen elektrische Energie und Druckluft nur in sehr begrenztem Umfang für den Antrieb einer oder mehrerer Dosierpumpen zur Verfügung steht. Wird die Dosierpumpe beispielsweise zum Ausbringen von Pflanzenschutzmittel eingesetzt, wird eine nicht geringe Antriebsenergie benötigt, die vom Fahrzeug auf hydraulische Weise, nicht jedoch elektrisch zur Verfügung gestellt werden kann. Landwirtschaftliche Fahrzeuge und Baumaschinen sind nämlich vielfach mit einer leistungsfähigen Bordhydraulik ausgestattet, die einen Antrieb des Pendelkolbens der Dosierpumpe ermöglichen.

Bei der erfindungsgemäßen Dosierpumpe wirkt die Hydraulikflüssigkeit direkt auf die Antriebsflächen des Pendelkolbens. Der Pendelkolben wird insbesondere direkt hydraulisch angetrieben. Dies bedeutet, dass es zwischen dem hydraulischen Antrieb und dem Pendelkolben keine mechanische Kraftübertragung gibt, so dass der hydraulische Druck direkt auf die Antriebsflächen des Pendelkolbens wirkt, um diesen zu bewegen und anzutreiben. Durch einen solchen direkten hydraulischen Antrieb kann zwar ein sehr hoher Druck zum Fördern des Fluids erzeugt werden. Allerdings ergibt sich bei einem Hydraulikantrieb das Problem, dass der Kolben einer herkömmlichen Kolbenpumpe sehr stark positiv und negativ beschleunigt wird. Außerdem treten sehr hohe Kolbengeschwindigkeiten auf. Infolge des zumeist nur geringen Widerstands beim Ansaugen sind die Beschleunigung und die Geschwindigkeit des Kolbens bei einem hydraulischen Antrieb beim Ansaugen des zu fördernden Fluids sehr hoch. Dies hat zur Folge, dass beim Ansaugen das zu fördernde Fluid der Geschwindigkeit des Kolbens nicht mehr folgen kann und Kavitation auftritt. Bei der Kavitation bilden sich dampfgefüllte Hohlräume in der zu dosierenden Flüssigkeit. Die Dampfblasen implodieren während der Förderung der Flüssigkeit wieder. Dies kann zu mechanischen Schäden in der Dosierpumpe führen. Außerdem wird hierdurch die Genauigkeit bei der Dosierung beeinträchtigt.

Das Auftreten von Kavitation bei der hydraulisch angetriebenen Dosierpumpe wird erfindungsgemäß dadurch vermieden, dass der Pendelkolben in zwei gegenüberliegenden Förderkammern hin und her bewegt wird. Dabei wird die Beschleunigung des Pendelkolbens beim Ansaugen von Fluid in die erste Förderkammer durch das gegenüberliegende Fördern des Fluids aus der zweiten Förderkammer heraus gedämpft. Das Fördern bei der zweiten Förderkammer dämpft somit die Bewegung des Pendelkolbens beim Ansaugen von Fluid in die erste Förderkammer. Umgekehrt dämpft das Fördern des Fluids aus der ersten Förderkammer heraus die Beschleunigung des Pendelkolbens beim Ansaugen von Fluid in die zweite Förderkammer. Der Widerstand auf der Förderseite wird somit jeweils zur Bremse der Bewegung des Pendelkolbens auf der Ansaugseite genutzt. Erst diese spezielle Ausgestaltung der erfindungsgemäßen Dosierpumpe erlaubt den Einsatz eines hydraulischen Antriebs. Derartige Probleme der Kavitation treten bei elektrisch und pneumatisch angetriebenen Dosierpumpen üblicherweise nicht auf, so dass der Aufbau solcher Dosierpumpen nicht ohne weiteres auf Dosierpumpen mit hydraulischem Antrieb übertragen werden kann.

Die beiden Antriebsflächen sind zu den Hydraulikkammern insbesondere so ausgerichtet, dass ein Druck der Hydraulikflüssigkeit in der ersten Hydraulikkammer auf die erste Antriebsfläche den Pendelkolben von der ersten in die zweite Stellung bewegt und ein Druck der Hydraulikflüssigkeit in der zweiten Hydraulikkammer auf die zweite Hydraulikfläche, den Pendelkolben von der zweiten in die erste Stellung bewegt.

Die beiden Förderkammern sind insbesondere vollständig voneinander getrennt. Sie weisen jeweils zumindest eine Einlassleitung und eine Auslassleitung auf, die in die jeweilige Förderkammer münden.

Der Pendelkolben weist insbesondere zwei Seiten auf. Auf der ersten Seite besitzt der Pendelkolben eine erste Förderfläche bei der ersten Förderkammer. Diese erste Förderfläche ist insbesondere genauso ausgerichtet wie die erste Antriebsfläche. Gleichermaßen weist der Pendelkolben auf der anderen Seite eine zweite Förderfläche auf, die bei der zweiten Förderkammer angeordnet ist und die wie die zweite Antriebsfläche ausgerichtet ist.

Gemäß einer Ausgestaltung der erfindungsgemäßen Dosierpumpe sind die beiden Antriebsflächen ringförmig ausgebildet. Die beiden Förderflächen können beispielsweise kreisscheibenförmig ausgebildet sein. Sie sind insbesondere bei den beiden Stirnflächen des Pendelkolbens gebildet. Die Antriebsflächen können beispielsweise von Vorsprüngen im Mittelbereich des Pendelkolbens gebildet sein.

Gemäß einer Weiterbildung der erfindungsgemäßen Dosierpumpe ist die Einstelleinrichtung insbesondere so ausgebildet, dass die Minimalvolumina der Förderkammern üblicherweise Null sind. Das heißt, das in der Förderkammer befindliche Fluid wird beim jeweiligen äußersten Wendepunkt des Pendelkolbens vollständig aus der Förderkammer herausgedrückt. In diesem Fall ist jedoch das jeweilige Maximalvolumen der Förderkammer von der Einstelleinrichtung einstellbar. Hierdurch lassen sich vorteilhafterweise verschiedene Dosiervolumina einstellen.

Die erfindungsgemäße Dosierpumpe lässt sich aufgrund der Einstelleinrichtung vorteilhafterweise dann einsetzen, wenn das Fördervolumen über einen sehr großen Bereich einstellbar und dennoch eine exakte Dosierung gewährleistet sein soll.

Ferner lässt sich die Dosierpumpe gemäß dieser Weiterbildung der Erfindung vorteilhafterweise in Verbindung mit Fluiden einsetzen, bei denen sich Feststoffteilchen leicht absetzen können. In einem solchen Fall ist es erforderlich, vor dem Dosieren des Fluids den Fluidvorrat aufzurühren bzw. umzuwälzen. Vorteilhafterweise lässt sich die erfindungsgemäße Dosierpumpe sowohl zum Dosieren als auch zum Aufrühren bzw. Umwälzen des Fluidvorrats einsetzen. Mit der erfindungsgemäßen Dosierpumpe ist es möglich, einen relativ kleinen Volumenstrom exakt zu dosieren und gleichzeitig auch einen vergleichsweise hohen Volumenstrom zum Aufrühren und Umwälzen des zu dosierenden Fluids zu fördern. Mittels der Einstelleinrichtung ist ein Wechsel zwischen diesen beiden Betriebsarten einfach und schnell möglich.

Durch den Anschlagkolben der Einstelleinrichtung wird insbesondere erreicht, dass der Hub des Pendelkolbens begrenzt wird.

Bevorzugt umfasst die Einstelleinrichtung zwei Anschlagkolben, wobei der erste Anschlagkolben bei der ersten Förderkammer und der zweite Anschlagkolben bei der zweiten Förderkammer angeordnet ist. Der Pendelkolben und der oder die Anschlagkolben sind insbesondere in einem zylindrischen Hohlraum des Gehäuses hin und her bewegbar. Der oder die Anschlagkolben sind dabei insbesondere jeweils zwischen zumindest zwei entgegengesetzt ausgerichteten Anschlägen in dem zylindrischen Hohlraum des Gehäuses hin und her bewegbar. Das Bewegen der Anschlagkolben dient allerdings nur dem Einstellen der Maximalvolumina der Förderkammern. Während des Betriebs der Dosierpumpe bleiben die Anschlagkolben ortsfest und bilden insbesondere Anschläge für den Pendelkolben.

Vorteilhafterweise wird hierdurch ein sehr einfacher und robuster Aufbau für eine Dosierpumpe bereitgestellt, die sehr hohen Förderdrücken Stand hält und deren Dosiervolumen flexibel einstellbar ist. Wenn der Abstand der beiden Anschläge bei der jeweiligen Förderkammer unterschiedlich ist, können auf diese Weise vier unterschiedliche Förderbereiche für die Dosierpumpe bereitgestellt werden, wobei zum Verändern des Förderbereichs nur ein Anschlagkolben oder beide Anschlagkolben jeweils von einem Anschlag zum anderen Anschlag bewegt werden müssen.

Die Anschlagkolben lassen sich insbesondere auf derselben Achse bewegen wie der Pendelkolben. Hierdurch wird erreicht, dass der Hohlraum in dem Gehäuse, welcher den Pendelkolben und die Anschlagkolben aufnimmt, kostengünstig als zylindrische Bohrung gebildet werden kann.

Gemäß einer Weiterbildung der erfindungsgemäßen Dosierpumpe kommuniziert der Anschlagkolben bei einer ersten Anschlagkolbenfläche, die außerhalb der diesem Anschlagkolben zugeordneten Förderkammer liegt, mit dem hydraulischen Antrieb. Diese Anschlagkolbenfläche ist demnach mit der Hydraulikflüssigkeit beaufschlagbar, so dass auf den Anschlagkolben eine Kraft ausgeübt wird, die einer Vergrößerung der zugeordneten Förderkammer entgegenwirkt. Diese erste Anschlagkolbenfläche ist insbesondere größer als jede der Antriebsflächen des Pendelkolbens. Hierdurch wird erreicht, dass die auf den Anschlagkolben ausgeübte Kraft von Seiten der ersten Anschlagkolbenfläche her größer ist, als die Kraft, die von Seiten der zugeordneten Förderkammer auf den Anschlagkolben ausgeübt wird, wenn das Fluid aus dieser Förderkammer herausgefördert wird.

Gemäß einer weiteren Ausgestaltung der erfindungsgemäßen Dosierpumpe kommuniziert der Anschlagkolben bei einer zweiten Anschlagkolbenfläche, die außerhalb der diesem Anschlagkolben zugeordneten Förderkammer liegt, mit dem hydraulischen Antrieb. Diese zweite Anschlagkolbenfläche ist mit der Hydraulikflüssigkeit so beaufschlagbar, dass auf den Anschlagkolben eine Kraft ausgeübt wird, die einer Verkleinerung der zugeordneten Förderkammer entgegenwirkt. Die zweite Anschlagkolbenfläche ist insbesondere kleiner als die erste Anschlagkolbenfläche. Durch die Beaufschlagung der zweiten Anschlagkolbenfläche mit Hydraulikflüssigkeit wird verhindert, dass sich die zugeordnete Förderkammer beim Ansaugen von Fluid in die entsprechende Förderkammer die Größe dieser Förderkammer verkleinert.

Gemäß einer Weiterbildung der erfindungsgemäßen Dosierpumpe sind zumindest einer der Förderkammern, bevorzugt beiden Förderkammern, zumindest zwei Auslassleitungen zugeordnet. Mittels der Einstelleinrichtung sind in diesem Fall zumindest zwei verschiedene Maximalvolumina so einstellbar, dass bei einem ersten Maximalvolumen zumindest die eine Auslassleitung in die Förderkammer mündet und bei einem zweiten Maximalvolumen nur die andere der beiden Auslassleitungen in die Förderkammer mündet. Insbesondere münden bei einem ersten Maximalvolumen die beiden Auslassleitungen in die Förderkammer und bei dem zweiten Maximalvolumen mündet nur die andere Auslassleitung in die Förderkammer.

Gemäß einem weiteren, zweiten Aspekt der Erfindung wird eine Dosierpumpe bereitgestellt, die nicht nur einen hydraulischen Antrieb umfassen kann, sondern auch einen Antrieb anderer Art, beispielsweise einen elektrischen oder pneumatischen Antrieb. Die Dosierpumpe gemäß diesem zweiten Aspekt umfasst ein Gehäuse und einen Pendelkolben, der so in dem Gehäuse aufgenommen ist, dass eine erste und eine zweite Förderkammer gebildet sind. Die Dosierpumpe umfasst ferner einen Antrieb, der mit dem Pendelkolben so gekoppelt ist, dass mit dem Antrieb der Pendelkolben zwischen einer ersten und einer zweiten Stellung hin und her bewegbar ist, wobei bei der Bewegung von der ersten in die zweite Stellung das Volumen der ersten Förderkammer vergrößert und das Volumen der zweiten Förderkammer verkleinert wird und bei einer Bewegung von der zweiten in die erste Stellung des Volumen der zweiten Förderkammer vergrößert und das Volumen der ersten Förderkammer verkleinert wird. Diese Dosierpumpe ist dadurch gekennzeichnet, dass sie eine Einstelleinrichtung aufweist, welche so mit dem Pendelkolben gekoppelt ist, dass die Bewegung des Pendelkolbens so begrenzbar ist, dass für zumindest eine erste der Förderkammern verschiedene Minimal- und/oder Maximalvolumina einstellbar sind. Zumindest dieser ersten Förderkammer sind zumindest zwei Auslassleitungen zugeordnet. Mittels der Einstelleinrichtung sind zumindest zwei verschiedene Maximalvolumina so einstellbar, dass bei einem ersten Maximalvolumen zumindest die eine Auslassleitung in die erste Förderkammer mündet und bei einem zweiten Maximalvolumen nur die andere der beiden Auslassleitungen in die erste Förderkammer mündet. Bei dem ersten Maximalvolumen münden insbesondere die beiden Auslassleitungen in die Förderkammer, wohingegen bei dem zweiten Maximalvolumen nur die andere der beiden Auslassleitungen in die Förderkammer mündet.

Die Dosierpumpe gemäß diesem zweiten Aspekt der Erfindung lässt sich vorteilhafterweise dann einsetzen, wenn das Fördervolumen über einen sehr großen Bereich einstellbar und dennoch eine exakte Dosierung gewährleistet sein soll.

Ferner lässt sich die Dosierpumpe gemäß dem zweiten Aspekt der Erfindung vorteilhafterweise in Verbindung mit Fluiden einsetzen, bei denen sich Feststoffteilchen leicht absetzen können. In einem solchen Fall ist es erforderlich, vor dem Dosieren des Fluids den Fluidvorrat aufzurühren bzw. umzuwälzen. Vorteilhafterweise lässt sich die erfindungsgemäße Dosierpumpe sowohl zum Dosieren als auch zum Aufrühren bzw. Umwälzen des Fluidvorrats einsetzen. Mit der erfindungsgemäßen Dosierpumpe ist es möglich, einen relativ kleinen Volumenstrom exakt zu dosieren und gleichzeitig auch einen vergleichsweise hohen Volumenstrom zum Aufrühren und Umwälzen des zu dosierenden Fluids zu fördern. Mittels der Einstelleinrichtung ist ein Wechsel zwischen diesen beiden Betriebsarten einfach und schnell möglich.

Wie bei der erfindungsgemäßen Dosierpumpe gemäß dem ersten Aspekt der Erfindung kann auch die Dosierpumpe gemäß dem zweiten Aspekt der Erfindung einen Anschlagkolben umfassen, der das Volumen der ersten Förderkammer, die dem Anschlagkolben zugeordnet ist, begrenzt. Es wird auf diese Weise insbesondere der Hub des Pendelkolbens begrenzt.

Bevorzugt umfasst die Einstelleinrichtung zwei Anschlagkolben, wobei der erste Anschlagkolben bei der ersten Förderkammer und der zweite Anschlagkolben bei der zweiten Förderkammer angeordnet ist. Der Pendelkolben und der oder die Anschlagkolben sind insbesondere in einem zylindrischen Hohlraum des Gehäuses hin und her bewegbar. Der oder die Anschlagkolben sind dabei insbesondere jeweils zwischen zumindest zwei entgegengesetzt ausgerichteten Anschlägen in dem zylindrischen Hohlraum des Gehäuses hin und her bewegbar. Das Bewegen der Anschlagkolben dient allerdings nur dem Einstellen der Maximalvolumina der Förderkammern. Während des Betriebs der Dosierpumpe bleiben die Anschlagkolben ortsfest und bilden insbesondere Anschläge für den Pendelkolben.

Vorteilhafterweise wird hierdurch ein sehr einfacher und robuster Aufbau für eine Dosierpumpe bereitgestellt, die sehr hohen Förderdrücken Stand hält und deren Dosiervolumen flexibel einstellbar ist. Wenn der Abstand der beiden Anschläge bei der jeweiligen Förderkammer unterschiedlich ist, können auf diese Weise vier unterschiedliche Förderbereiche für die Dosierpumpe bereitgestellt werden, wobei zum Verändern des Förderbereichs nur ein Anschlagkolben oder beide Anschlagkolben jeweils von einem Anschlag zum anderen Anschlag bewegt werden müssen.

Die Anschlagkolben lassen sich insbesondere auf derselben Achse bewegen wie der Pendelkolben. Hierdurch wird erreicht, dass der Hohlraum in dem Gehäuse, welcher den Pendelkolben und die Anschlagkolben aufnimmt, kostengünstig als zylindrische Bohrung gebildet werden kann.

Gemäß einer Weiterbildung der erfindungsgemäßen Dosierpumpe gemäß dem zweiten Aspekt der Erfindung umfasst die Dosierpumpe einen hydraulischen Antrieb zum Bereitstellen einer unter Druck stehenden Hydraulikflüssigkeit. In diesem Fall ist der Pendelkolben so in dem Gehäuse aufgenommen ist, dass zumindest eine erste und eine zweite Hydraulikkammer und eine erste und eine zweite Förderkammer gebildet sind. Der Pendelkolben weist dabei bei der ersten Hydraulikkammer zumindest eine erste Antriebsfläche und bei der zweiten Hydraulikkammer zumindest eine zweite Antriebsfläche auf. Die Hydraulikkammern kommunizieren mit dem hydraulischen Antrieb, so dass der Pendelkolben von der Hydraulikflüssigkeit zwischen der ersten und der zweiten Stellung hin und her bewegbar ist.

Die beiden Antriebsflächen sind zu den Hydraulikkammern insbesondere so ausgerichtet, dass ein Druck der Hydraulikflüssigkeit in der ersten Hydraulikkammer auf die erste Antriebsfläche den Pendelkolben von der ersten in die zweite Stellung bewegt und ein Druck der Hydraulikflüssigkeit in der zweiten Hydraulikkammer auf die zweite Hydraulikfläche, den Pendelkolben von der zweiten in die erste Stellung bewegt.

Die beiden Förderkammern sind insbesondere vollständig voneinander getrennt. Sie weisen jeweils zumindest eine Einlassleitung und eine Auslassleitung auf, die in die jeweilige Förderkammer münden.

Der Pendelkolben weist insbesondere zwei Seiten auf. Auf der ersten Seite besitzt der Pendelkolben eine erste Förderfläche bei der ersten Förderkammer. Diese erste Förderfläche ist insbesondere genauso ausgerichtet wie die erste Antriebsfläche. Gleichermaßen weist der Pendelkolben auf der anderen Seite eine zweite Förderfläche auf, die bei der zweiten Förderkammer angeordnet ist und die wie die zweite Antriebsfläche ausgerichtet ist.

Gemäß einer Ausgestaltung der erfindungsgemäßen Dosierpumpe sind die beiden Antriebsflächen ringförmig ausgebildet. Die beiden Förderflächen können beispielsweise kreisscheibenförmig ausgebildet sein. Sie sind insbesondere bei den beiden Stirnflächen des Pendelkolbens gebildet. Die Antriebsflächen können beispielsweise von Vorsprüngen im Mittelbereich des Pendelkolbens gebildet sein.

Gemäß einer Weiterbildung der erfindungsgemäßen Dosierpumpe kommuniziert der Anschlagkolben bei einer ersten Anschlagkolbenfläche, die außerhalb der diesem Anschlagkolben zugeordneten Förderkammer liegt, mit dem hydraulischen Antrieb. Diese Anschlagkolbenfläche ist demnach mit der Hydraulikflüssigkeit beaufschlagbar, so dass auf den Anschlagkolben eine Kraft ausgeübt wird, die einer Vergrößerung der zugeordneten Förderkammer entgegenwirkt. Diese erste Anschlagkolbenfläche ist insbesondere größer als jede der Antriebsflächen des Pendelkolbens. Hierdurch wird erreicht, dass die auf den Anschlagkolben ausgeübte Kraft von Seiten der ersten Anschlagkolbenfläche her größer ist, als die Kraft, die von Seiten der zugeordneten Förderkammer auf den Anschlagkolben ausgeübt wird, wenn das Fluid aus dieser Förderkammer herausgefördert wird.

Gemäß einer weiteren Ausgestaltung der erfindungsgemäßen Dosierpumpe kommuniziert der Anschlagkolben bei einer zweiten Anschlagkolbenfläche, die außerhalb der diesem Anschlagkolben zugeordneten Förderkammer liegt, mit dem hydraulischen Antrieb. Diese zweite Anschlagkolbenfläche ist mit der Hydraulikflüssigkeit so beaufschlagbar, dass auf den Anschlagkolben eine Kraft ausgeübt wird, die einer Verkleinerung der zugeordneten Förderkammer entgegenwirkt. Die zweite Anschlagkolbenfläche ist insbesondere kleiner als die erste Anschlagkolbenfläche. Durch die Beaufschlagung der zweiten Anschlagkolbenfläche mit Hydraulikflüssigkeit wird verhindert, dass sich die zugeordnete Förderkammer beim Ansaugen von Fluid in die entsprechende Förderkammer die Größe dieser Förderkammer verkleinert.

Die Erfindung betrifft des Weiteren ein Dosiersystem zum Mischen zweier Fluide. Das Dosiersystem umfasst eine der vorstehend beschriebenen Dosierpumpen gemäß dem ersten oder zweiten Aspekt der Erfindung. Ferner weist das Dosiersystem einen ersten Behälter für das erste Fluid, der über eine erste Einlassleitung mit der ersten Förderkammer der Dosierpumpe in Fluidverbindung steht, und einen zweiten Behälter für das zweite Fluid auf, der über eine zweite Einlassleitung mit der zweiten Förderkammer der Dosierpumpe in Fluidverbindung steht. Bei dem erfindungsgemäßen Dosiersystem sind die Auslassleitung der ersten Förderkammer und die Auslassleitung der zweiten Förderkammer zum dosierten Mischen der Fluide zusammengeführt. Auf diese Weise lassen sich zwei Fluide sehr einfach und schnell miteinander mischen und gleichzeitig fördern. Das Mischverhältnis der beiden Fluide kann in diesem Fall über die Einstelleinrichtung der Dosierpumpe eingestellt werden. Wenn die beiden Förderkammern das gleiche Maximalvolumen aufweisen, ergibt sich ein Mischverhältnis von 1:1. Wenn sich das Maximalvolumen der beiden Förderkammern unterscheidet, kann entsprechend ein anderes Mischverhältnis realisiert werden.

Erfindungsgemäß wird ferner ein Dosiersystem zum Dosieren zumindest eines Fluids bereitgestellt. In diesem Fall umfasst das Dosiersystem eine der vorstehend beschriebenen Dosierpumpen gemäß dem ersten oder zweiten Aspekt der Erfindung, welche die Einstelleinrichtung aufweist, wobei der ersten Förderkammer eine erste und eine zweite Auslassleitung zugeordnet sind, wie es vorstehend beschrieben wurde. Das Dosiersystem umfasst ferner einen Behälter für das zu dosierende Fluid, der über eine Einlassleitung mit der ersten und zweiten Förderkammer der Dosierpumpe in Fluidverbindung steht. Des Weiteren ist die andere der beiden Auslassleitungen der ersten Förderkammer eine Dosierleitung zum Dosieren des Fluids. Die eine der beiden Auslassleitungen der ersten Förderkammer steht hingegen in Fluidverbindung mit dem Behälter, so dass über die eine Auslassleitung Fluid zurück in den Behälter zum Umwälzen des in dem Behälter befindlichen Fluids pumpbar ist. Über die eine der beiden Auslassleitungen kann somit das im Behälter befindliche Fluid aufgerührt werden.

Dieses Dosiersystem ist vorteilhafterweise in Verbindung mit Flüssigkeiten, insbesondere Pflanzenschutzmitteln, einsetzbar, die dazu neigen, dass sich Feststoffe absetzen. Über die Einstelleinrichtung der Dosierpumpe kann die Dosierpumpe zunächst in einen Umwälzbetrieb geschaltet werden, so dass zunächst das zu dosierende Fluid aufgerührt wird. Anschließend kann ein Wechsel in den Dosierbetrieb erfolgen und ein kleinerer Fluidstrom kann über die Dosierleitung ausgestoßen werden.

Gemäß einer Weiterbildung dieses erfindungsgemäßen Dosiersystems sind mittels der Einstelleinrichtung zumindest zwei verschiedene Maximalvolumina so einstellbar, dass bei einem ersten Maximalvolumen die beiden Auslassleitungen in die erste Förderkammer münden und bei einem zweiten Maximalvolumen nur die andere der beiden Auslassleitungen in die erste Förderkammer mündet. In diesem Fall ist insbesondere in der einen der beiden Auslassleitungen ein erstes Ventil und in der anderen der beiden Auslassleitungen ein zweites Ventil angeordnet. Der Öffnungsdruck des zweiten Ventils ist dabei größer als der Öffnungsdruck des ersten Ventils. Wenn somit bei einem ersten Maximalvolumen die beiden Auslassleitungen in die erste Förderkammer münden, kann der von dem Pendelkolben ausgeübte Druck auf das Fluid so gewählt werden, dass nur das erste Ventil bei der einen Auslassleitung öffnet, das zweite Ventil bei der anderen Auslassleitung hingegen geschlossen bleibt. Auf diese Weise wird erreicht, dass die Dosierpumpe im Umwälzbetrieb arbeitet, obwohl beide Auslassleitungen in die Förderkammer münden und insbesondere die andere Auslassleitung nicht durch die Einstelleinrichtung abgedeckt ist.

Die Erfindung wird nun anhand von Ausführungsbeispielen mit Bezug zu den Figuren erläutert.
- Figur 1: zeigt ein erstes Ausführungsbeispiel der erfindungsgemäßen Dosierpumpe, welche in ein erstes Ausführungsbeispiel des erfindungsgemäßen Dosiersystems integriert ist,
- Figur 2: zeigt ein zweites Ausführungsbeispiel der erfindungsgemäßen Dosierpumpe in einem Dosierzustand,
- Figur 3: zeigt das zweite Ausführungsbeispiel der Dosierpumpe in einem Umwälzzustand,
- Figur 4: zeigt das erste Ausführungsbeispiel der Dosierpumpe, welche in ein zweites Ausführungsbeispiel des erfindungsgemäßen Dosiersystems integriert ist, und
- Figur 5: zeigt schematisch den Aufbau eines dritten Ausführungsbeispiels des erfindungsgemäßen Dosiersystems.

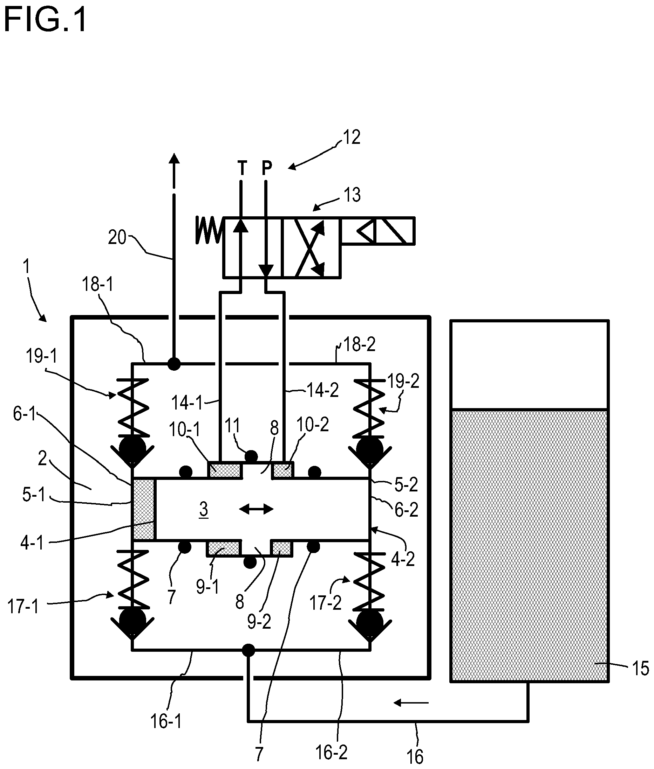

Im Folgenden wird mit Bezug zu Figur 1 das erste Ausführungsbeispiel der erfindungsgemäßen Dosierpumpe und das erste Ausführungsbeispiel des erfindungsgemäßen Dosiersystems beschrieben:
Die Dosierpumpe 1 umfasst ein Gehäuse 2, in dem ein Hohlraum ausgebildet ist. Der Hohlraum besitzt die Form von zwei konzentrischen Zylindern, wobei der Zylinder mit dem kleinern Durchmesser länger ist, als der Zylinder mit dem größeren Durchmesser. In dem Hohlraum des Gehäuses 2 ist ein Pendelkolben 3 bewegbar aufgenommen. Der Pendelkolben 3 kann in Richtung des Pfeils A in dem Hohlraum zwischen einer ersten Stellung und einer zweiten Stellung hin und her bewegt werden. In der ersten Stellung des Pendelkolbens 3 schlägt die erste Förderfläche 4-1 an die Gehäusewand 5-1 an. Der Pendelkolben 3 befindet sich dann auf der in Figur 1 linken Seite des Hohlraums des Gehäuses 2. Auf der anderen, in Figur 1 rechten Seite des Pendelkolbens 3 ist dann eine zweite Förderkammer 6-2 gebildet, die in diesem ersten Zustand des Pendelkolbens 3 ihr Maximalvolumen hat. In der zweiten in Figur 1 gezeigten Stellung des Pendelkolbens 3, bei der er sich auf der in Figur 1 rechten Seite des Hohlraums des Gehäuses 2 befindet, schlägt die zweite Förderfläche 6-2 des Pendelkolbens 3 gegen die Gehäusewand 5-2 an, so dass die zweite Förderkammer 6-2 ihr Minimalvolumen von Null hat. Auf der anderen, in Figur 1 linken Seite ist in dieser Stellung des Pendelkolbens 3 eine erste Förderkammer 6-1 gebildet. Das Maximalvolumen dieser ersten Förderkammer 6-1 ist gleich dem Maximalvolumen der zweiten Förderkammer 6-2.

Die Form des Pendelkolbens 3 ist zylindrisch. Sie korrespondiert zu der Größe des Zylinders, der den zylindrischen Hohlraum in dem Gehäuse 2 bildet, der den kleineren Durchmesser hat. Zum Abdichten der Förderkammern 6-1 und 6-2 bei der Hin- und Herbewegung des Pendelkolbens 3 sind Dichtringe 7 vorgesehen. Es sind somit zwei voneinander getrennte Förderkammern 6-1 und 6-2 gebildet.

Der Pendelkolben 3 weist in der Mitte einen ringartigen Vorsprung 8 auf. Dieser Vorsprung 8 erstreckt sich in den Bereich des Hohlraums in dem Gehäuse 2, welcher von dem Zylinder mit dem größeren Durchmesser des zylindrischen Hohlraums gebildet ist. Der ringartige Vorsprung 8 unterteilt diesen Bereich in eine erste Hydraulikkammer 9-1 und eine zweite Hydraulikkammer 9-2. Bei dem ringartigen Vorsprung 8 ist eine erste Antriebsfläche 10-1 gebildet, welche in die erste Hydraulikkammer 9-1 gerichtet ist und diese begrenzt. Auf der abgewandten Seite ist bei dem ringartigen Vorsprung 8 eine zweite Antriebsfläche 10-2 gebildet, welche in die zweite Hydraulikkammer 9-2 gerichtet ist und diese begrenzt. Um die beiden Hydraulikkammern 9-2 und 9-1 bei einer Hin- und Herbewegung des Pendelkolbens 3 gegeneinander abzudichten, ist ein weiterer Dichtring 11 vorgesehen. Es sind somit zwei voneinander getrennte Hydraulikkammern 9-2 und 9-1 gebildet.

Bei einer Bewegung des Pendelkolbens 3 von der ersten Stellung in die zweite Stellung wird somit das Volumen der ersten Förderkammer 6-1 vergrößert und das Volumen der zweiten Förderkammer 6-2 verkleinert. Umgekehrt wird bei einer Bewegung des Pendelkolbens 3 von der zweiten Stellung in die erste Stellung das Volumen der ersten Förderkammer 6-1 verkleinert und das Volumen der zweiten Förderkammer 6-2 vergrößert.

Für die Bewegung des Pendelkolbens 3 ist ein hydraulischer Antrieb 12 vorgesehen. Dieser hydraulische Antrieb 12 stellt eine unter Druck stehende Hydraulikflüssigkeit bereit. Über ein Ventil 13 und eine erste Hydraulikleitung 14-1 wird unter Druck stehende Hydraulikflüssigkeit von dem hydraulischen Antrieb 12 in die erste Hydraulikkammer 9-1 gepumpt. In der ersten Hydraulikkammer 9-1 beaufschlagt die Hydraulikflüssigkeit die erste Antriebsfläche 10-1 mit einem Druck und bewegt hierdurch den Pendelkolben 3 von der ersten Stellung in die zweite Stellung, das heißt bei der Darstellung gemäß Figur 1 nach rechts. Bei dieser Bewegung wird die Hydraulikflüssigkeit in der zweiten Hydraulikkammer 9-2 nicht mit Druck beaufschlagt. Ferner kann über das Ventil 13 und eine zweite Hydraulikleitung 14-2 unter Druck stehende Hydraulikflüssigkeit in die zweite Hydraulikkammer 9-2 gepumpt werden. Hierdurch wird der Pendelkolben 3 von der zweiten in die erste Stellung bewegt, das heißt bei der Darstellung gemäß Figur 1 nach links bewegt. In diesem Fall wird die Hydraulikflüssigkeit in der ersten Hydraulikkammer 9-1 nicht mit Druck beaufschlagt. Wenn nun abwechselnd unter Druck stehende Hydraulikflüssigkeit wechselweise in die Hydraulikkammer 9-1 und 9-2 gepumpt wird, kann der Pendelkolben 3 in Richtung des Pfeils A hin und her bewegt werden. Die Hydraulikkammern 9-1, 9-2 kommunizieren somit mit dem hydraulischen Antrieb 12, so dass der Pendelkolben 3 von der Hydraulikflüssigkeit zwischen der ersten und der zweiten Stellung hin und her bewegbar ist.

In die erste Förderkammer 6-1 kann das zu dosierende Fluid aus einem Behälter 15 über eine erste Einlassleitung 16-1 und ein erstes Einlassventil 17-1 gelangen. Gleichermaßen kann das in dem Behälter 15 befindliche Fluid über eine zweite Einlassleitung 16-2 und ein zweites Einlassventil 17-2 in die zweite Förderkammer 6-2 gelangen. Die Einlassventile 17-1 und 17-2 sind als Ansaugventile ausgebildet. Beispielsweise sind es Rückschlagventile, die nur einen Fluidstrom in Richtung der Förderkammern 6-1 und 6-2 zulassen.

Ferner mündet in die erste Förderkammer 6-1 eine erste Auslassleitung 18-1, in der ein erstes Auslassventil 19-1 angeordnet ist. Gleichermaßen mündet in die zweite Förderkammer 6-2 eine zweite Auslassleitung 18-2, in der ein zweites Auslassventil 19-2 angeordnet ist. Auch die beiden Auslassventile 19-1 und 19-2 sind als Rückschlagventile ausgebildet, die nur einen Fluidstrom aus den Förderkammern 6-1 und 6-2 heraus zulassen. Die Öffnungskräfte der Auslassventile 19-1 und 19-2 sind geringer als die Kräfte, welche von den Drücken ausgeübt werden, welche von den Förderflächen 4-1 und 4-2 des Pendelkolbens 3 erzeugt werden können. Die beiden Auslassleitungen 18-1 und 18-2 werden in eine Dosierleitung 20 zusammengeführt.

Die Dosierpumpe 1 und das Dosiersystem, welches mit der Dosierpumpe 1 betrieben wird, werden wie folgt betrieben:
In dem Behälter 15 befindet sich das zu dosierende Fluid. Der hydraulische Antrieb 12 bewegt den Pendelkolben 3 in Richtung des Pfeils A hin und her. Dadurch wird bei einer Bewegung von der ersten Stellung in die zweite Stellung des Pendelkolbens 3 Fluid über die Einlassleitung 16-1 und das Einlassventil 17-1 in die erste Förderkammer 6-1 gesaugt. Gleichzeitig wird das in der zweiten Förderkammer 6-2 befindliche Fluid aus dieser zweiten Förderkammer 6-2 über das zweite Auslassventil 19-2 in die zweite Auslassleitung 18-2 gepumpt. Bei der Bewegung des Pendelkolbens 3 von der zweiten Stellung in die erste Stellung wird umgekehrt Fluid über die zweite Einlassleitung 16-2 und das zweite Einlassventil 17-2 in die zweite Förderkammer 6-2 gesaugt. Gleichzeitig wird das in der ersten Förderkammer 6-1 befindliche Fluid über das erste Auslassventil 19-1 in die erste Auslassleitung 18-1 gepumpt.

Bei der Hin- und Herbewegung des Pendelkolbens 3 wird die Beschleunigung des Pendelkolbens 3 jeweils auf der Förderseite gedämpft bzw. abgebremst. Hierdurch wird verhindert, dass der Pendelkolben 3 zu stark beschleunigt wird und zu hohe Geschwindigkeiten auftreten. Hierdurch kann eine Kavitation in den Förderkammern 6-1 und 6-2 vermieden werden. Es kann jedoch der hydraulische Antrieb 12, welcher beispielsweise auf einer landwirtschaftlichen Maschine oder einer Baumaschine angeordnet ist, verwendet werden.

Mittels dieses Dosiersystems wird eine definierte Dosiermenge über die Dosierleitung 20 ausgestoßen. Das geförderte Volumen ergibt sich dabei aus den Maximalvolumina der beiden Förderkammern 6-1 und 6-2 sowie der Anzahl der Zyklen, welche der Pendelkolben 3 durchlaufen hat. Bei einer Bewegung von der ersten Stellung in die zweite Stellung des Pendelkolbens 3 wird das Maximalvolumen der zweiten Förderkammer 6-2 bei der Dosierleitung 20 ausgestoßen. Bei der Bewegung des Pendelkolbens 3 von der zweiten Stellung in die erste Stellung wird das Maximalvolumen der ersten Förderkammer 6-1 über die Dosierleitung 20 ausgestoßen.

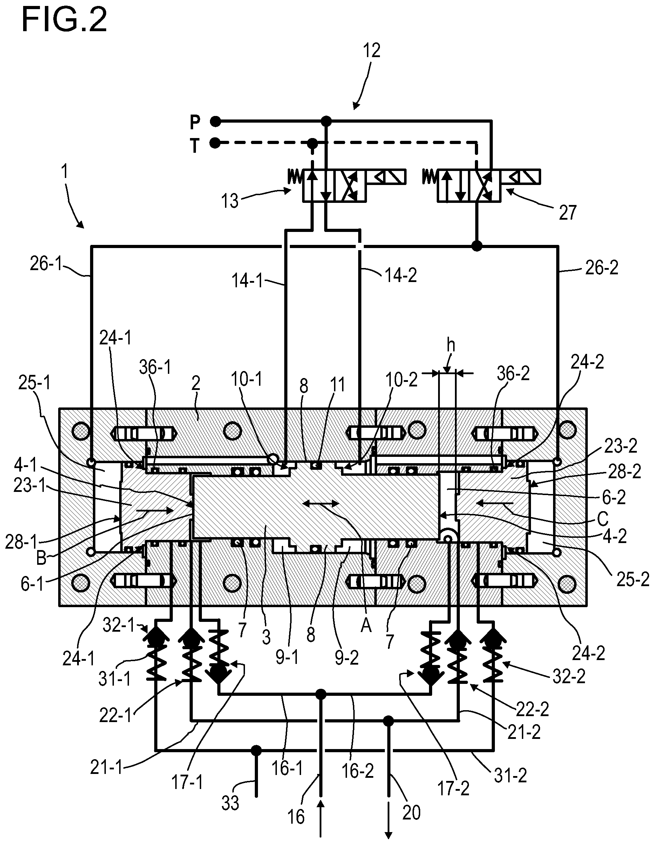

Mit Bezug zu Fig. 2 wird ein zweites Ausführungsbeispiel der erfindungsgemäßen Dosierpumpe 1 erläutert:
Bei der Beschreibung des zweiten Ausführungsbeispiels der Dosierpumpe 1 werden dieselben Bezugszeichen für Teile verwendet, die auch von der Dosierpumpe 1 des ersten Ausführungsbeispiels umfasst sind.

Wie bei dem ersten Ausführungsbeispiel der Dosierpumpe 1 weist auch die Dosierpumpe 1 des zweiten Ausführungsbeispiels ein Gehäuse 2 auf, in dem ein Hohlraum ausgebildet ist, in dem ein Pendelkolben 3 angeordnet ist, der in Richtung des Pfeils A hin und her bewegbar ist. Auf einer ersten Seite weist der Pendelkolben 3 eine erste Förderfläche 4-1 auf, bei der eine erste Förderkammer 6-1 gebildet ist, die in dem in Figur 2 gezeigten Zustand ein Minimalvolumen von Null aufweist. Auf der anderen Seite weist der Pendelkolben 3 eine zweite Förderfläche 4-2 auf, bei der eine zweite Förderkammer 6-2 gebildet ist. Bei dem in Figur 2 gezeigten Zustand des Pendelkolbens 3 besitzt diese zweite Förderkammer 4-2 ihr Maximalvolumen, welches jedoch, wie es später erläutert wird, verändert werden kann. Die Förderkammern 6-1 und 6-2 sind durch Dichtringe 7 abgedichtet.

Auch bei diesem Ausführungsbeispiel der Dosierpumpe 1 weist der Pendelkolben 3 in der Mitte einen ringartigen Vorsprung 8 auf, der sich in einen Bereich des Hohlraums des Gehäuses 2 erstreckt, so dass zwei getrennte Hydraulikkammern 9-1 und 9-2 gebildet sind. Bei der ersten Hydraulikkammer 9-1 ist die erste Antriebsfläche 10-1 des Pendelkolbens 3 angeordnet. Bei der zweiten Hydraulikkammer 9-2 ist die zweite Antriebsfläche 10-2 des Pendelkolbens 3 angeordnet. Die beiden Hydraulikkammern 9-1 und 9-2 sind durch einen Dichtring 11 voneinander abgedichtet.

Auch bei dem zweiten Ausführungsbeispiel der Dosierpumpe 1 wird der Pendelkolben 3 durch einen hydraulischen Antrieb 12 angetrieben, das heißt in Richtung des Pfeils A hin und her bewegt. Es wird jedoch darauf hingewiesen, dass bei dem zweiten Ausführungsbeispiel der Dosierpumpe 1 diese auch von einem andersartigen Antrieb angetrieben werden könnte, zum Beispiel durch einen pneumatischen oder einen elektrischen Antrieb.

Der hydraulische Antrieb 12 stellt eine unter Druck stehende Hydraulikflüssigkeit bereit, die über das Ventil 13 wechselweise in die erste und zweite Hydraulikkammer 9-1, 9-2 gepumpt wird und auf diese Weise die Hin- und Herbewegung des Pendelkolbens 3 antreibt. Hierfür ist der hydraulische Antrieb 12 über die Hydraulikleitungen 14-1 und 14-2 mit den Hydraulikkammern 9-1 und 9-2 verbunden. Die Hydraulikkammern 9-1, 9-2 kommunizieren somit mit dem hydraulischen Antrieb 12, so dass der Pendelkolben 3 von der Hydraulikflüssigkeit zwischen der ersten und der zweiten Stellung hin und her bewegbar ist.

Das zu dosierende Fluid wird über eine Einlassleitung 16 angesaugt, welche sich in eine erste 16-1 und eine zweite Einlassleitung 16-2 verzweigt. Die erste Einlassleitung 16-1 mündet über ein erstes Einlassventil 17-1 in die erste Förderkammer 6-1. Die zweite Einlassleitung 16-2 mündet über ein zweites Einlassventil 17-2 in die zweite Förderkammer 6-2. Bei einer Bewegung des Pendelkolbens 3 von der ersten in die zweite Stellung vergrößert sich das Volumen der ersten Förderkammer 6-1 und das wird Fluid aus der ersten Einlassleitung 16-1 in die erste Förderkammer 6-1 angesaugt. Umgekehrt wird bei einer Bewegung des Pendelkolbens 3 von der zweiten Stellung in die erste Stellung, bei der sich das Volumen der zweiten Förderkammer 6-2 vergrößert, Fluid über die zweite Einlassleitung 16-2 in die zweite Förderkammer 6-2 gesaugt.

In die erste Förderkammer 6-1 mündet ferner eine erste Auslassleitung 21-1, in der ein erstes Auslassventil 22-1 angeordnet ist. Die erste Auslassleitung 21-1 entspricht der ersten Auslassleitung 18-1 des ersten Ausführungsbeispiels. Ferner mündet auch in die zweite Förderkammer 6-2 eine zweite Auslassleitung 21-2, in der ein zweites Auslassventil 22-2 angeordnet ist. Die zweite Auslassleitung 21-2 entspricht der zweiten Auslassleitung 18-2 des ersten Ausführungsbeispiels. Die beiden Auslassleitungen 21-1 und 21-2 münden in eine Dosierleitung 20.

In dem in Figur 2 gezeigten Zustand wird die Dosierpumpe 1 des zweiten Ausführungsbeispiels wie die Dosierpumpe 1 des ersten Ausführungsbeispiels betrieben. Durch den hydraulischen Antrieb 12 wird der Pendelkolben 3 hin und her bewegt. Dabei wird wechselweise Fluid in die Förderkammern 6-1 und 6-2 aus den Einlassleitungen 16-1 und 16-2 angesaugt und über die Auslassleitungen 21-1 und 21-2 herausgefördert. Auf diese Weise kann ein definiertes Fluidvolumen bzw. ein definierter Fluidstrom in der Dosierleitung 20 erzeugt werden.

Im Unterschied zu der Dosierpumpe 1 des ersten Ausführungsbeispiels weist die Dosierpumpe 1 des zweiten Ausführungsbeispiels jedoch eine Einstelleinrichtung auf, mit der die Bewegung des Pendelkolbens 3 begrenzbar ist. Auf diese Weise können die Maximalvolumina der Förderkammern 6-1 und 6-2 verändert werden. Die Einstelleinrichtung umfasst einen ersten Anschlagkolben 23-1. Dieser erste Anschlagkolben 23-1 ist auch in dem Hohlraum des Gehäuses 2 aufgenommen. Auf der dem Pendelkolben 3 zugewandten Fläche begrenzt er die erste Förderkammer 6-1. Ferner bildet er bei dieser Fläche einen Anschlag für die erste Förderfläche 4-1 des Pendelkolbens 3.

Bei der in Figur 2 gezeigten Stellung des ersten Anschlagkolbens 23-1 verkleinert der erste Anschlagkolben 23-1 das maximale Fördervolumen der ersten Förderkammer 6-1. Hierfür wird der erste Anschlagkolben 23-1 in Richtung des Pfeils B gegen einen Anschlag 24-1 gedrückt. Um diesen Druck zu erzeugen, ist auf der von dem Pendelkolben 3 abgewandten Seite des ersten Anschlagkolbens 23-1 eine erste Druckkammer 25-1 gebildet. In diese erste Druckkammer 25-1 mündet eine dritte Hydraulikleitung 26-1. Über den hydraulischen Antrieb 12 und ein Ventil 27 kann Hydraulikflüssigkeit in die erste Druckkammer 25-1 gepumpt werden, so dass die Hydraulikflüssigkeit einen Druck auf die Stirnfläche 28-1 des ersten Anschlagkolbens 23-1 in Richtung des Pfeils B ausübt. Die Stirnfläche 28-1, auf welche die Hydraulikflüssigkeit wirkt, ist größer als die Antriebsflächen 10-1 und 10-2 des Pendelkolbens 3. Hierdurch wird sichergestellt, dass bei einer Bewegung des Pendelkolbens 3 von der zweiten Stellung in die erste Stellung der Anschlagkolben 23-1 nicht von dem ersten Anschlag 24-1 weg bewegt wird.

Auf der anderen Seite des Pendelkolbens ist auf gleiche Weise ein zweiter Anschlagkolben 23-2 vorgesehen. Er wird in Richtung des Pfeils C gegen einen zweiten Anschlag 24-2 gedrückt. Hierfür ist eine zweite Druckkammer 25-2 gebildet, in die eine vierte Hydraulikleitung 26-2 mündet. Der hydraulische Antrieb 12 kann über das Ventil 27 und die vierte Hydraulikleitung 26-2 unter Druck stehende Hydraulikflüssigkeit in der zweiten Druckkammer 25-2 bereitstellen und sicherstellen, dass während der Bewegung des Pendelkolbens 3 von der ersten in die zweite Stellung der zweite Anschlagkolben 23-2 nicht von dem zweiten Anschlag 24-2 weg bewegt wird. Hierfür wird auf die Stirnfläche 28-2 des zweiten Anschlagkolbens 23-2 ein Druck in Richtung des Pfeils C ausübt.

Die erste Druckkammer 25-1 ist gegenüber der ersten Förderkammer 6-1 durch einen Dichtring 36-1 abgedichtet. Die zweite Druckkammer 25-2 ist gegenüber der zweiten Förderkammer 6-2 durch einen Dichtring 36-2 abgedichtet.

Bei der in Figur 2 gezeigten Stellung des ersten Anschlagkolbens 23-1 und des zweiten Anschlagkolbens 23-2 ergibt sich der Hub h des Pendelkolbens 3. Aus der Größe dieses Hubs h und der Größe der Förderflächen 25-1 und 25-2 ergibt sich das von der Dosierpumpe 1 geförderte Fluidvolumen bei einem Zyklus des Pendelkolbens 3.

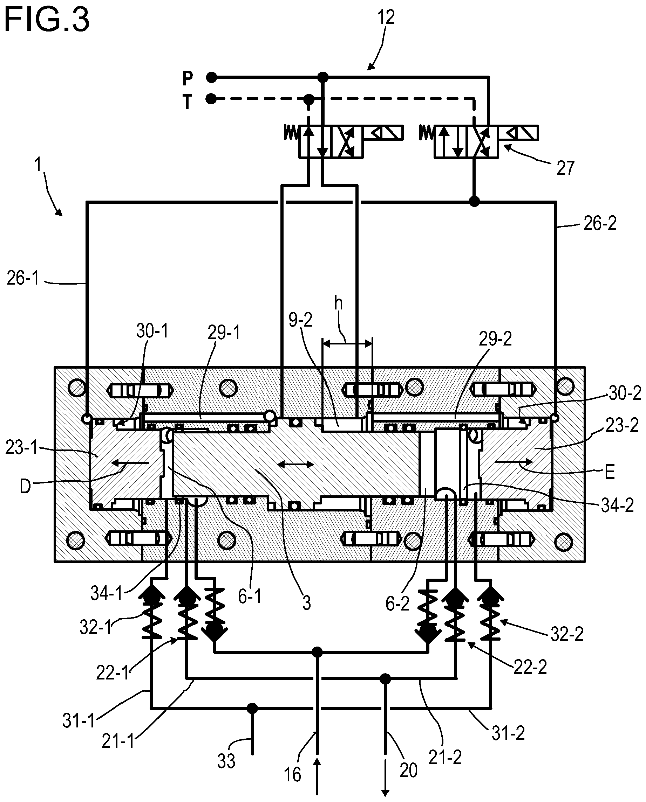

Die Maximalvolumina der Förderkammern 6-1 und 6-2 können durch eine Bewegung der Anschlagkolben 23-1 und 23-2 verändert werden. In Figur 3 ist eine Stellung der Anschlagkolben 23-1 und 23-2 gezeigt, bei der die Maximalvolumina beider Förderkammern 6-1 und 6-2 vergrößert worden sind. Der Hub h des Pendelkolbens 3 ist in diesem Fall größer als der Hub h bei der Stellung der beiden Anschlagkolben 23-1 und 23-2 gemäß Figur 2.

Die veränderte Stellung der Anschlagkolben 23-1 und 23-2 wird im Folgenden mit Bezug zu Figur 3 erläutert:
In diesem Zustand werden die Druckkammern 25-1 und 25-2 nicht über die dritte und vierte Hydraulikleitung 26-1 und 26-2 mit unter Druck stehender Hydraulikflüssigkeit beaufschlagt. Allerdings wird Hydraulikflüssigkeit von der ersten Hydraulikkammer 9-1 über einen ersten Kanal 29-1 zu einer ringförmigen ersten Anschlagkolbenfläche 30-1 des ersten Anschlagkolbens 23-1 geführt. Durch diese Verbindung wird immer dann, wenn sich der Pendelkolben 3 zurück bewegt, um Fluid anzusaugen, ein hydraulischer Druck auf die erste Anschlagkolbenfläche 30-1 ausgeübt, um sicherzustellen, dass der erste Anschlagkolben 23-1 in Richtung des Pfeils D gegen seinen rückseitigen Anschlag am Gehäuse 2 fixiert bleibt, wenn Fluid in die erste Förderkammer 6-1 angesaugt wird Der Unterdruck beim Ansaugen des Fluids kann somit den ersten Anschlagkolben 23-1 nicht bewegen.

Gleichermaßen ist auf der anderen Seite des Pendelkolbens 3 ein Kanal 29-2 ausgebildet, welcher die zweite Hydraulikkammer 9-2 mit einer ringförmigen zweiten Anschlagkolbenfläche 30-2 des zweiten Anschlagkolbens 23-2 verbindet. Hierdurch wird auf gleiche Weise sichergestellt, dass der zweite Anschlagkolben 23-2 in Richtung des Pfeils E gegen seinen rückseitigen Anschlag am Gehäuse 2 fixiert bleibt, wenn Fluid in die zweite Förderkammer 6-2 angesaugt wird. Der Unterdruck beim Ansaugen des Fluids kann somit auch den zweiten Anschlagkolben 23-2 nicht bewegen.

Bei der in Figur 3 gezeigten Stellung der beiden Anschlagkolben 23-1 und 23-2 ergibt sich für die Fluidförderung folgender Unterschied zu dem in Figur 2 gezeigten Zustand der Anschlagkolben 23-1 und 23-2:
In die erste Förderkammer 6-1 mündet eine weitere, dritte Auslassleitung 31-1, in der ein drittes Auslassventil 32-1 angeordnet ist. Gleichermaßen mündet auch in die zweite Förderkammer 6-2 eine vierte Auslassleitung 31-2, in der ein viertes Auslassventil 32-2 angeordnet ist.

Zwischen der Öffnung der dritten Auslassleitung 31-1 in die erste Förderkammer 6-1 und der Öffnung der ersten Auslassleitung 22-1 in die erste Förderkammer 6-1 ist ein weiterer Dichtring 34-1 vorgesehen. Gleichermaßen ist zwischen der Öffnung der vierten Auslassleitung 31-2 und der zweiten Auslassleitung 21-2 in die zweite Förderkammer 6-2 ein Dichtring 34-2 vorgesehen.

Bei der Stellung der Anschlagkolben 23-1 und 23-2 gemäß Figur 2 sind die Öffnungen der Auslassleitungen 31-1 und 31-2 in die Förderkammern 6-1 und 6-2 jedoch von den Anschlagkolben 23-1 und 23-2 verschlossen. Bei der Stellung der Anschlagkolben 23-1 und 23-2 gemäß Fig. 3 geben die beiden Anschlagkolben 23-1 und 23-2 jedoch die Öffnungen der dritten und vierten Auslassleitung 31-1 und 31-2 frei. Es ist somit möglich, dass das Fluid nicht nur in die Auslassleitungen 21-1 und 21-2 gefördert wird, sondern auch in die Auslassleitungen 31-1 und 31-2.

Der Öffnungsdruck für das dritte und vierte Auslassventil 32-1 und 32-2 ist nun so gewählt, dass er geringer ist als der Öffnungsdruck für das erste Auslassventil 22-1 und das zweite Auslassventil 22-2. Bei den in Figur 3 gestellten Stellungen der Anschlagkolben 23-1 und 23-2 wird der Pendelkolben 3 nun von dem hydraulischen Antrieb 12 so angetrieben, dass der Förderdruck in den Förderkammern 6-1 und 6-2 größer ist als der Öffnungsdruck des dritten und vierten Auslassventils 32-1 und 32-2, jedoch geringer ist als der Öffnungsdruck des ersten und zweiten Auslassventils 22-1 und 22-2. In diesem Zustand der Anschlagkolben 23-1 und 23-2 wird somit wechselweise Fluid aus den Förderkammern 6-1 und 6-2 in die Auslassleitungen 31-1 und 31-2 gefördert. Die dritte und vierte Auslassleitung 31-1 und 31-2 werden in eine Umwälzleitung 33 zusammengeführt.

Bei der in Figur 2 gestellten Stellung der Anschlagkolben 23-1 und 23-2 wird die Dosierpumpe 1 im Dosierbetrieb betrieben. Es wird Fluid in die Dosierleitung 20 gefördert. Bei der in Figur 3 gezeigten Stellung der Anschlagkolben 23-1 und 23-2 wird die Dosierpumpe 1 hingegen im Umwälzbetrieb betrieben. Es wird ein größeres Fluidvolumen in die Umwälzleitung 33 gefördert, welche zum Aufrühren eines Fluidvorrats verwendet werden kann. Dabei kann im Umwälzbetrieb ein etwa 40 mal größeres Fluidvolumen gefördert werden als im Dosierbetrieb.

In weiteren möglichen Ausgestaltungen können sich die Anschlagkolben 23-1 und 23-2 auch in unterschiedlichen Positionen befinden. Beispielsweise kann der erste Anschlagkolben 23-1 wie in Figur 2 gezeigt gegen den Anschlag 24-1 gedrückt werden, der zweite Anschlagkolben 23-2 hingegen wie in Figur 3 gezeigt gegen seinen rückseitigen Anschlag gedrückt werden. Umgekehrt kann auch der erste Anschlagkolben 23-1 gegen seinen rückseitigen Anschlag gedrückt werden und sich der zweite Anschlagkolben 23-2 in der in Figur 2 gezeigten Stellung befinden. Wenn die Abstände der Anschläge für die beiden Anschlagkolben 23-1 und 23-2 unterschiedlich sind, können bis zu vier unterschiedliche Dosier- bzw. Umwälzbereiche geschaltet werden. Wenn ferner die Öffnungsdrücke der Auslassventile 21-1, 21-2, 32-1 und 32-2 veränderbar sind, kann ferner festgelegt werden, ob bei den jeweiligen Stellungen der beiden Anschlagkolben 23-1 und 23-2 das Fluid im jeweiligen Bereich dosiert wird oder zum Aufrühren eines Fluidvorrats verwendet wird.

Außerdem kann vorgesehen sein, dass sich die Position der Anschläge 24-1 bzw. 24-2 verändern lässt, um auf diese Weise das Maximalvolumen der beiden Förderkammern 6-1 und 6-2 kontinuierlich zu verändern.

Auch bei dem zweiten Ausführungsbeispiel der Dosierpumpe 1 wird die Bewegung des Pendelkolbens 3 durch die jeweilige Förderung des Fluids aus den Förderkammern 6-1 und 6-2 heraus gedämpft und abgebremst, so dass das Auftreten von Kavitation auf der Ansaugseite vermieden wird.

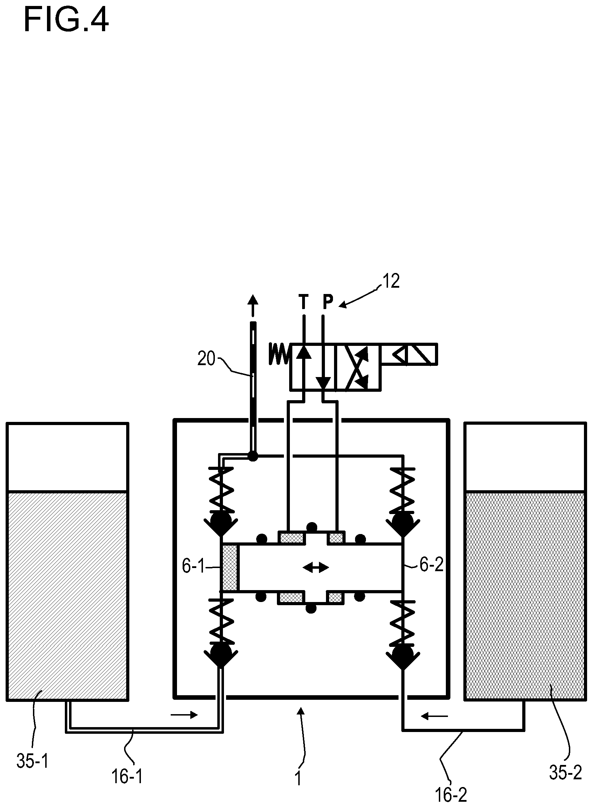

Mit Bezug zu Figur 4 wird ein zweites Ausführungsbeispiel des erfindungsgemäßen Dosiersystems beschrieben:
Das Dosiersystem umfasst eine Dosierpumpe. Es kann sowohl die mit Bezug zu Figur 1 beschriebene Dosierpumpe 1 verwendet werden als auch die mit Bezug zu den Figuren 2 und 3 beschriebene Dosierpumpe 1 verwendet werden. Wenn die mit Bezug zu Figur 1 beschriebene Dosierpumpe 1 verwendet wird, ist auch der hydraulische Antrieb 12 vorgesehen. Wenn die mit Bezug zu den Figuren 2 und 3 beschriebene Dosierpumpe 1 eingesetzt wird, kann auch ein andersartiger Antrieb vorgesehen sein.

Die erste Einlassleitung 16-1 ist in diesem Fall mit einem ersten Behälter 35-1 für ein erstes zu dosierendes Fluid verbunden. Die zweite Einlassleitung 16-2 ist mit einem zweiten Behälter 35-2 für ein zweites zu dosierendes Fluid verbunden. Anders als bei den vorstehend beschriebenen Ausführungsbeispielen sind die beiden Einlassleitungen 16-1 und 16-2 nicht miteinander verbunden. Im Betrieb der Dosierpumpe 1 wird somit über die Einlassleitung 16-1 Fluid von dem ersten Behälter 35-1 in die erste Förderkammer 6-1 und über die zweite Einlassleitung 16-2 wird das in dem zweiten Behälter 35-2 befindliche Fluid in die zweite Förderkammer 6-2 gefördert. Von den beiden Förderkammern 6-1 und 6-2 werden die beiden unterschiedlichen Fluide in die Dosierleitung 20 zusammengeführt. Hierdurch werden bei diesem Dosiersystem die beiden Fluide miteinander vermischt. Das Mischverhältnis wird dabei durch die Größe der Förderkammern 6-1 und 6-2 bestimmt. Ist das Volumen dieser Förderkammern 6-1 und 6-2 identisch. erfolgt eine Mischung im Verhältnis 1:1. Unterscheiden sich die Volumina der beiden Förderkammern 6-1 und 6-2, ändert sich das Mischverhältnis entsprechend.

Wenn die mit Bezug zu den Figuren 2 und 3 beschriebene Dosierpumpe 1 verwendet wird, kann das Mischverhältnis dadurch verändert werden, dass die Stellung der Anschlagkolben 23-1 und 23-2 verändert wird.

Bei einem noch weiteren Ausführungsbeispiel des erfindungsgemäßen Dosiersystems wird die mit Bezug zu den Figuren 2 und 3 beschriebene Dosierpumpe 1 in dem ansonsten in Figur 1 beschriebenen Dosiersystem eingesetzt.

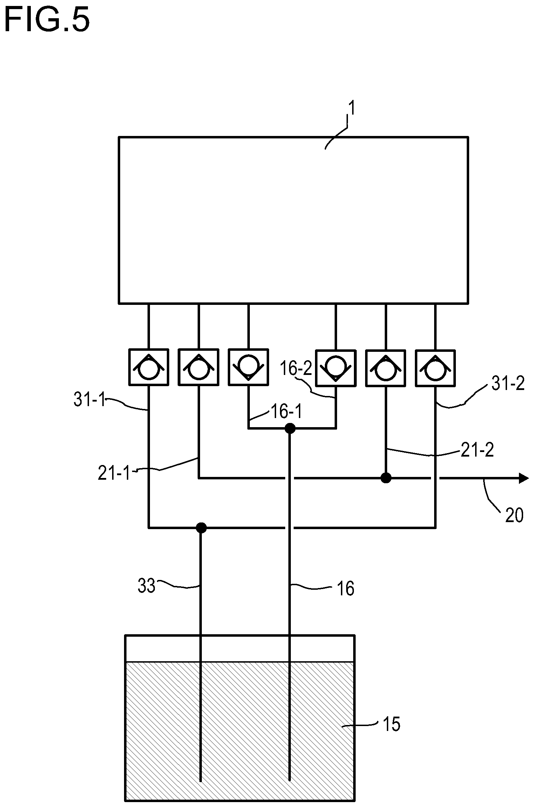

Schließlich wird mit Bezug zu Figur 5 ein noch weiteres Ausführungsbeispiel eines Dosiersystems erläutert:
In diesem Fall wird bei dem Dosiersystem die mit Bezug zu den Figuren 2 und 3 beschriebene Dosierpumpe 1 eingesetzt. In der mit Bezug zu Figur 2 erläuterten Stellung der Anschlagkolben 23-1 und 23-2 wird, wie mit Bezug zu Figur 2 erläutert, ein Fluid aus einem Behälter 15 über die Einlassleitungen 16, 16-1 und 16-2 angesaugt und in die Dosierleitung 20 gefördert. Wenn die Stellung der Anschlagkolben 23-1 und 23-2 jedoch so verändert wird, dass die in Figur 3 gezeigte Stellung der Anschlagkolben 23-1 und 23-2 vorliegt, wird das Fluid aus dem Behälter 15 angesaugt, jedoch in die Umwälzleitung 33 gepumpt. Da der Hub h des Pendelkolbens 3 in diesem Fall ein Mehrfaches des Hubs h des Pendelkolbens 3 bei der in Figur 2 gezeigten Stellung der Anschlagkolben 23-1 und 23-2 ist, wird in diesem Umwälzzustand ein signifikant größerer Volumenstrom erzeugt. Dieser Volumenstrom des Fluids wird über die Umwälzleitung 33 zurück in den Behälter 15 geführt, wodurch das in dem Behälter 15 befindliche Fluid aufgerührt wird. Hierdurch kann vermieden werden, dass sich Feststoffteilchen am Boden des Behälters 15 absetzen.

### Bezugszeichenliste

- 1: Dosierpumpe
- 2: Gehäuse
- 3: Pendelkolben
- 4-1: erste Förderfläche
- 4-2: zweite Förderfläche
- 5-1: erste Gehäusefläche
- 5-2: zweite Gehäusefläche
- 6-1: erste Förderkammer
- 6-2: zweite Förderkammer
- 7: Dichtringe
- 8: Vorsprung des Pendelkolbens 3
- 9-1: erste Hydraulikkammer
- 9-2: zweite Hydraulikkammer
- 10-1: erste Antriebsfläche
- 10-2: zweite Antriebsfläche
- 11: Dichtring
- 12: hydraulischer Antrieb
- 13: Ventil
- 14-1: erste Hydraulikleitung
- 14-2: zweite Hydraulikleitung
- 15: Behälter
- 16: Einlassleitung
- 16-1: erste Einlassleitung
- 16-2: zweite Einlassleitung
- 17-1: erstes Einlassventil
- 17-2: zweites Einlassventil
- 18-1: erste Auslassleitung
- 18-2: zweite Auslassleitung
- 19-1: erstes Auslassventil
- 19-2: zweites Auslassventil
- 20: Dosierleitung
- 21-1: erste Auslassleitung
- 21-2: zweite Auslassleitung
- 22-1: erstes Auslassventil
- 22-2: zweites Auslassventil
- 23-1: erster Anschlagkolben
- 23-2: zweiter Anschlagkolben
- 24-1: erster Anschlag
- 24-2: zweiter Anschlag
- 25-1: erste Druckkammer
- 25-2: zweite Druckkammer
- 26-1: dritte Hydraulikleitung
- 26-2: vierte Hydraulikleitung
- 27: Ventil
- 28-1: Stirnfläche des ersten Anschlagkolbens 23-1
- 28-2: Stirnfläche des zweiten Anschlagkolbens 23-2
- 29-1: erster Kanal
- 29-2: zweiter Kanal
- 30-1: erste Anschlagkolbenfläche
- 30-2: zweite Anschlagkolbenfläche
- 31-1: dritte Auslassleitung
- 31-2: vierte Auslassleitung
- 32-1: drittes Auslassventil
- 32-2: viertes Auslassventil
- 33: Umwälzleitung
- 34-1: Dichtring
- 34-2: Dichtring
- 35-1: erster Behälter
- 35-2: zweiter Behälter
- 36-1, 36-2: Dichtring

## Patentansprüche

1. Dosierpumpe mit
- einem hydraulischen Antrieb (12) zum Bereitstellen einer unter Druck stehenden Hydraulikflüssigkeit,
- einem Gehäuse (2),
- einem Pendelkolben (3), der so in dem Gehäuse (2) aufgenommen ist, dass zumindest eine erste und eine zweite Hydraulikkammer (9-1, 9-2) und eine erste (6-1) und eine zweite Förderkammer (6-2) gebildet sind,
- wobei der Pendelkolben (3) bei der ersten Hydraulikkammer (9-1) zumindest eine erste Antriebsfläche (10-1) und bei der zweiten Hydraulikkammer (9-2) zumindest eine zweite Antriebsfläche (10-2) aufweist und die Hydraulikkammern (9-1, 9-2) mit dem hydraulischen Antrieb (12) kommunizieren, so dass der Pendelkolben (3) von der Hydraulikflüssigkeit zwischen einer ersten und einer zweiten Stellung hin und her bewegbar ist,
- wobei bei der Bewegung von der ersten in die zweite Stellung das Volumen der ersten Förderkammer (6-1) vergrößert und das Volumen zweiten Förderkammer (6-2) verkleinert wird und bei der Bewegung von der zweiten in die erste Stellung das Volumen der zweiten Förderkammer (6-2) vergrößert und das Volumen der ersten Förderkammer (6-1) verkleinert wird
**gekennzeichnet durch**
- eine Einstelleinrichtung, welche so mit dem Pendelkolben (3) gekoppelt ist, dass die Bewegung des Pendelkolbens (3) so begrenzbar ist, dass für zumindest eine der Förderkammern (6-1, 6-2) verschiedene Minimal- und/oder Maximalvolumina einstellbar sind,
- wobei die Einstelleinrichtung zumindest einen Anschlagkolben (23-1, 23-2) umfasst, der den Raum der Förderkammer (6-1, 6-2), die dem Anschlagkolben (23-1, 23-2) zugeordnet ist, begrenzt.

2. Dosierpumpe (1) nach Anspruch 1,
**dadurch gekennzeichnet,**
**dass** die Einstelleinrichtung zwei Anschlagkolben (23-1, 23-2) umfasst, wobei der erste Anschlagkolben (23-1) bei der ersten Förderkammer (6-1) und der zweite Anschlagkolben (23-2) bei der zweiten Förderkammer (6-2) angeordnet ist.

3. Dosierpumpe (1) nach Anspruch 1 oder 2,
**dadurch gekennzeichnet,**
**dass** der Pendelkolben (3) und der oder die Anschlagkolben (23-1, 23-2) in einem zylindrischen Hohlraum des Gehäuses (2) hin und her bewegbar ist/sind.

4. Dosierpumpe (1) nach einem der Ansprüche 1 bis 3,
**dadurch gekennzeichnet,**
**dass** der oder die Anschlagkolben (23-1, 23-2) jeweils zwischen zumindest zwei entgegengesetzt ausgerichteten Anschlägen in dem zylindrischen Hohlraum des Gehäuses (2) hin und her bewegbar sind.

5. Dosierpumpe (1) nach einem der Ansprüche 1 bis 4,
**dadurch gekennzeichnet,**
**dass** zumindest ein Anschlagkolben (23-1, 23-2) bei einer ersten Anschlagkolbenfläche (30-1, 30-2), die außerhalb der diesem Anschlagkolben (23-1, 23-2) zugeordneten Förderkammer (6-1, 6-2) liegt, mit dem hydraulischen Antrieb (12) kommuniziert und mit der Hydraulikflüssigkeit so beaufschlagbar ist, dass auf den Anschlagkolben (23-1, 23-2) eine Kraft ausgeübt wird, die einer Vergrößerung der zugeordneten Förderkammer (6-1, 6-2) entgegenwirkt.

6. Dosierpumpe (1) nach einem der Ansprüche 1 bis 5,
**dadurch gekennzeichnet,**
**dass** zumindest ein Anschlagkolben (23-1, 23-2) bei einer zweiten Anschlagkolbenfläche (30-1, 30-2), die außerhalb der diesem Anschlagkolben (23-1, 23-2) zugeordneten Förderkammer (6-1, 6-2) liegt, mit dem hydraulischen Antrieb kommuniziert und mit der Hydraulikflüssigkeit so beaufschlagbar ist, dass auf den Anschlagkolben (23-1, 23-2) eine Kraft ausgeübt wird, die einer Verkleinerung der zugeordneten Förderkammer (6-1, 6-2) entgegenwirkt.

7. Dosierpumpe (1) nach einem der Ansprüche 1 bis 6,
**dadurch gekennzeichnet,**
**dass** zumindest einer (6-1) der Förderkammern (6-1, 6-2) zumindest zwei Auslassleitungen (21-1, 31-1) zugeordnet sind und dass mittels der Einstelleinrichtung zumindest zwei verschiedene Maximalvolumina so einstellbar sind, dass bei einem ersten Maximalvolumen zumindest die eine Auslassleitung (31-1) in die Förderkammer (6-1) mündet und bei einem zweiten Maximalvolumen nur die andere (21-1) der beiden Auslassleitungen (21-1, 31-1) in die Förderkammer (6-1) mündet.

8. Dosiersystem zum Mischen zweier Fluide mit
- einer Dosierpumpe (1) nach einem der vorhergehenden Ansprüche,
- einem ersten Behälter (35-1) für das erste Fluid, der über eine erste Einlassleitung (16-1) mit der ersten Förderkammer (6-1) der Dosierpumpe (1) in Fluidverbindung steht, und
- einem zweiten Behälter (35-2) für das zweite Fluid, der über eine zweite Einlassleitung (16-2) mit der zweiten Förderkammer (6-2) der Dosierpumpe (1) in Fluidverbindung steht,
- wobei die Auslassleitung (20) der ersten Förderkammer (6-1) und die Auslassleitung (20) der zweiten Förderkammer (6-2) zum dosierten Mischen der Fluide zusammengeführt sind.

9. Dosiersystem zum Dosieren zumindest eines Fluids mit
- einer Dosierpumpe (1) nach Anspruch 7,
- zumindest einem Behälter (15) für das zu dosierende Fluid,
- wobei der Behälter (15) über eine Einlassleitung (16) mit der ersten und zweiten Förderkammer (6-1, 6-2) der Dosierpumpe (1) in Fluidverbindung steht,
- wobei die andere (21-1) der beiden Auslassleitungen (21-1, 31-1) der ersten Förderkammer (6-1) eine Dosierleitung (20) zum Dosieren des Fluids ist und
- die eine (31-1) der beiden Auslassleitungen (21-1, 31-1) der ersten Förderkammer (6-1) in Fluidverbindung mit dem Behälter (15) steht, so dass über die eine Auslassleitung (31-1) Fluid zurück in den Behälter (16) zum Umwälzen des in den Behälter (15) befindlichen Fluids pumpbar ist.

10. Dosiersystem nach Anspruch 9,
**dadurch gekennzeichnet,**
**dass** mittels der Einstelleinrichtung zumindest zwei verschiedene Maximalvolumina so einstellbar sind, dass bei einem ersten Maximalvolumen die beiden Auslassleitungen (21-1,31-1) in die erste Förderkammer (6-1) münden und bei einem zweiten Maximalvolumen nur die andere (21-1) der beiden Auslassleitungen (21-1, 31-1) in die erste Förderkammer (6-1) mündet.

11. Dosiersystem nach Anspruch 9 oder 10,
**dadurch gekennzeichnet,**
**dass** in der einen Auslassleitung (31-1) ein erstes Ventil (32-1) und in der anderen Auslassleitung (21-1) ein zweites Ventil (22-1) angeordnet ist und dass der Öffnungsdruck des zweiten Ventils (22-1) größer als der Öffnungsdruck des ersten Ventils (32-1) ist.

12. Dosierpumpe (1) mit
- einem Gehäuse (2),
- einem Pendelkolben (3), der so in dem Gehäuse (2) aufgenommen ist, dass eine erste (6-1) und eine zweite Förderkammer (6-2) gebildet sind, und
- einem Antrieb (12), der mit dem Pendelkolben (3) so gekoppelt ist, dass mit dem Antrieb (12) der Pendelkolben (3) zwischen einer ersten und einer zweiten Stellung hin und her bewegbar ist, wobei bei der Bewegung von der ersten in die zweite Stellung das Volumen der ersten Förderkammer (6-1) vergrößert und das Volumen der zweiten Förderkammer (6-2) verkleinert wird und bei einer Bewegung von der zweiten in die erste Stellung das Volumen der zweiten Förderkammer (6-2) vergrößert und das Volumen der ersten Förderkammer (6-1) verkleinert wird,
**dadurch gekennzeichnet, dass**
- die Dosierpumpe (1) eine Einstelleinrichtung aufweist, welche so mit dem Pendelkolben (3) gekoppelt ist, dass die Bewegung des Pendelkolbens (3) so begrenzbar ist, dass für zumindest eine erste (6-1) der Förderkammern (6-1, 6-2) verschiedene Minimal- und/oder Maximalvolumina einstellbar sind,
- dass zumindest der ersten Förderkammer (6-1) zumindest zwei Auslassleitungen (21-1, 31-1) zugeordnet sind und
- dass mittels der Einstelleinrichtung zumindest zwei verschiedene Maximalvolumina so einstellbar sind, dass bei einem ersten Maximalvolumen zumindest die eine Auslassleitung (31-1) in die erste Förderkammer (6-1) mündet und bei einem zweiten Maximalvolumen nur die andere (21-1) der beiden Auslassleitungen (21-1, 31-1) in die Förderkammer (6-1) mündet.

13. Dosierpumpe (1) nach Anspruch 12,
**dadurch gekennzeichnet,**
**dass** die Einstelleinrichtung einen Anschlagkolben (23-1) umfasst, der das Volumen der ersten Förderkammer (6-1), die dem Anschlagkolben (23-1) zugeordnet ist, begrenzt.

14. Dosierpumpe (1) nach Anspruch 12 oder 13,
**dadurch gekennzeichnet,**
**dass** die Einstelleinrichtung zwei Anschlagkolben (23-1, 23-2) umfasst, wobei der erste Anschlagkolben (23-1) bei der ersten Förderkammer (6-1) und der zweite Anschlagkolben (23-2) bei der zweiten Förderkammer (6-2) angeordnet ist.

15. Dosierpumpe (1) nach Anspruch 13 oder 14,
**dadurch gekennzeichnet,**
**dass** der Pendelkolben (3) und der oder die Anschlagkolben (23-1, 23-2) in einem zylindrischen Hohlraum des Gehäuses (2) hin und her bewegbar ist/sind.

16. Dosierpumpe (1) nach einem der Ansprüche 13 bis 15,
**dadurch gekennzeichnet,**
**dass** der oder die Anschlagkolben (23-1, 23-2) jeweils zwischen zumindest zwei entgegengesetzt ausgerichteten Anschlägen in dem zylindrischen Hohlraum des Gehäuses (2) hin und her bewegbar sind.

17. Dosierpumpe (1) nach einem der Ansprüche 13 bis 16,
**dadurch gekennzeichnet,**
**dass** die Dosierpumpe (1) einen hydraulischen Antrieb (12) zum Bereitstellen einer unter Druck stehenden Hydraulikflüssigkeit aufweist und
**dass** zumindest ein Anschlagkolben (23-1, 23-2) bei einer ersten Anschlagkolbenfläche (30-1, 30-2), die außerhalb der diesem Anschlagkolben (23-1, 23-2) zugeordneten Förderkammer (6-1, 6-2) liegt, mit dem hydraulischen Antrieb (12) kommuniziert und mit der Hydraulikflüssigkeit so beaufschlagbar ist, dass auf den Anschlagkolben (23-1, 23-2) eine Kraft ausgeübt wird, die einer Vergrößerung der zugeordneten Förderkammer (6-1, 6-2) entgegenwirkt.

18. Dosierpumpe (1) nach einem der Ansprüche 13 bis 17,
**dadurch gekennzeichnet,**
**dass** zumindest ein Anschlagkolben (23-1, 23-2) bei einer zweiten Anschlagkolbenfläche (28-1, 28-2), die außerhalb der diesem Anschlagkolben (23-1, 23-2) zugeordneten Förderkammer (6-1, 6-2) liegt, mit dem hydraulischen Antrieb kommuniziert und mit der Hydraulikflüssigkeit so beaufschlagbar ist, dass auf den Anschlagkolben (23-1, 23-2) eine Kraft ausgeübt wird, die einer Verkleinerung der zugeordneten Förderkammer (6-1, 6-2) entgegenwirkt.

19. Dosiersystem zum Mischen zweier Fluide mit
- einer Dosierpumpe (1) nach einem der Ansprüche 12 bis 18,
- einem ersten Behälter (35-1) für das erste Fluid, der über eine erste Einlassleitung (16-1) mit der ersten Förderkammer (6-1) der Dosierpumpe (1) in Fluidverbindung steht, und
- einem zweiten Behälter (35-2) für das zweite Fluid, der über eine zweite Einlassleitung (16-2) mit der zweiten Förderkammer (6-2) der Dosierpumpe (1) in Fluidverbindung steht,
- wobei die Auslassleitung (20) der ersten Förderkammer (6-1) und die Auslassleitung (20) der zweiten Förderkammer (6-2) zum dosierten Mischen der Fluide zusammengeführt sind.

## Claims

1. A metering pump having
- a hydraulic drive (12) for supplying a hydraulic fluid under pressure,
- a housing (2),
- an oscillating piston (3), which is accommodated in the housing (2) in such a way that at least a first and a second hydraulic chamber (9-1, 9-2) and a first (6-1) and a second delivery chamber (6-2) are formed,
- wherein the oscillating piston (3) has at least a first driving surface (10-1) in the first hydraulic chamber (9-1) and at least a second driving surface (10-2) in the second hydraulic chamber (9-2), and the hydraulic chambers (9-1, 9-2) communicate with the hydraulic drive (12), thus enabling the oscillating piston (3) to be moved backward and forward between a first and a second position by the hydraulic fluid,
- wherein, during the movement from the first to the second position, the volume of the first delivery chamber (6-1) is enlarged and the volume of the second delivery chamber (6-2) is reduced and, during the movement from the second to the first position, the volume of the second delivery chamber (6-2) is enlarged and the volume of the first delivery chamber (6-1) is reduced
**characterized by**
- an adjusting device, which is coupled to the oscillating piston (3) in such a way that the movement of the oscillating piston (3) can be limited in such a way that different minimum and/or maximum volumes can be set for at least one of the delivery chambers (6-1, 6-2),
- wherein the adjusting device comprises at least one stop piston (23-1, 23-2), which limits the space in the delivery chamber (6-1, 6-2) which is assigned to the stop piston (23-1, 23-2).

2. The metering pump (1) according to claim 1,
**wherein**
the adjusting device comprises two stop pistons (23-1, 23-2), wherein the first stop piston (23-1) is arranged in the first delivery chamber (6-1) and the second stop piston (23-2) is arranged in the second delivery chamber (6-2).

3. The metering pump (1) according to claim 1 or 2,
**wherein**
the oscillating piston (3) and the stop piston or pistons (23-1, 23-2) can be moved backward and forward in a cylindrical cavity of the housing (2).

4. The metering pump (1) according to one of claims 1 to 3,
**wherein**
the stop piston or pistons (23-1, 23-2) can in each case be moved backward and forward between at least two oppositely oriented stops in the cylindrical cavity of the housing (2).

5. The metering pump (1) according to one of claims 1 to 4,
**wherein**
at least one stop piston (23-1, 23-2) communicates with the hydraulic drive (12) at a first stop piston surface (28-1, 28-2), which lies outside the delivery chamber (6-1, 6-2) assigned to said stop piston (23-1, 23-2), and can be supplied with the hydraulic fluid in such a way that a force that counteracts an enlargement of the associated delivery chamber (6-1, 6-2) is exerted on the stop piston (23-1, 23-2).

6. The metering pump (1) according to one of claims 1 to 5,
**wherein**
at least one stop piston (23-1, 23-2) communicates with the hydraulic drive at a second stop piston surface (30-1, 30-2), which lies outside the delivery chamber (6-1, 6-2) assigned to said stop piston (23-1, 23-2), and can be supplied with the hydraulic fluid in such a way that a force that counteracts a reduction in the size of the associated delivery chamber (6-1, 6-2) is exerted on the stop piston (23-1, 23-2).

7. The metering pump (1) according to one of claims 1 to 6,
**wherein**
at least one (6-1) of the delivery chambers (6-1, 6-2) is assigned at least two outlet lines (21-1, 31-1) and at least two different maximum volumes can be set in such a way by means of the adjusting device that, at a first maximum volume, at least one outlet line (31-1) opens into the delivery chamber (6-1) and, at a second maximum volume, only the other (21-1) of the two outlet lines (21-1, 31-1) opens into the delivery chamber (6-1).

8. A metering system for mixing two fluids, having
- a metering pump (1) according to one of the preceding claims,
- a first tank (35-1) for the first fluid, which is in fluid communication with the first delivery chamber (6-1) of the metering pump (1) via a first inlet line (16-1), and
- a second tank (35-2) for the second fluid, which is in fluid communication with the second delivery chamber (6-2) of the metering pump (1) via a second inlet line (16-2),
- wherein the outlet line (20) of the first delivery chamber (6-1) and the outlet line (20) of the second delivery chamber (6-2) are combined for metered mixing of the fluids.

9. A metering system for metering at least one fluid, having
- a metering pump (1) according to claim 7,
- at least one tank (15) for the fluid to be metered,
- wherein the tank (15) is in fluid communication with the first and the second delivery chamber (6-1, 6-2) of the metering pump (1) via an inlet line (16),
- wherein the other (21-1) of the two outlet lines (21-1, 31-1) of the first delivery chamber (6-1) is a metering line (20) for metering the fluid, and
- one (31-1) of the two outlet lines (21-1, 31-1) of the first delivery chamber (6-1) is in fluid communication with the tank (15), thus enabling fluid to be pumped back into the tank (15) via one outlet line (31-1) in order to circulate the fluid present in the tank (15).

10. The metering system according to claim 9,
**wherein**
at least two different maximum volumes can be set in such a way by means of the adjusting device that, at a first maximum volume, the two outlet lines (21-1, 31-1) open into the first delivery chamber (6-1) and, at a second maximum volume, only the other (21-1) of the two outlet lines (21-1, 31-1) opens into the first delivery chamber (6-1).

11. The metering system according to claim 9 or 10,
**wherein**
a first valve (32-1) is arranged in one outlet line (31-1), and a second valve (22-1) is arranged in the other outlet line (21-1), and the opening pressure of the second valve (22-1) is higher than the opening pressure of the first valve (32-1).

12. A metering pump (1) having
- a housing (2),
- an oscillating piston (3), which is accommodated in the housing (2) in such a way that a first (6-1) and a second delivery chamber (6-2) are formed, and
- a drive (12), which is coupled to the oscillating piston (3) in such a way that the oscillating piston (3) can be moved backward and forward between a first and a second position by means of the drive (12), wherein, during the movement from the first to the second position, the volume of the first delivery chamber (6-1) is enlarged and the volume of the second delivery chamber (6-2) is reduced and, during a movement from the second to the first position, the volume of the second delivery chamber (6-2) is enlarged and the volume of the first delivery chamber (6-1) is reduced,
**wherein**
- the metering pump (1) has an adjusting device, which is coupled to the oscillating piston (3) in such a way that the movement of the oscillating piston (3) can be limited in such a way that different minimum and/or maximum volumes can be set for at least a first (6-1) of the delivery chambers (6-1, 6-2),
- at least the first delivery chamber (6-1) is assigned at least two outlet lines (21-1, 31-1) and
- at least two different maximum volumes can be set in such a way by means of the adjusting device that, at a first maximum volume, at least one outlet line (31-1) opens into the first delivery chamber (6-1) and, at a second maximum volume, only the other (21-1) of the two outlet lines (21-1, 31-1) opens into the delivery chamber (6-1).

13. The metering pump (1) according to claim 12,
**wherein**
the adjusting device comprises a stop piston (23-1), which limits the volume of the first delivery chamber (6-1) which is assigned to the stop piston (23-1).

14. The metering pump (1) according to claim 12 or 13,
**wherein**
the adjusting device comprises two stop pistons (23-1, 23-2), wherein the first stop piston (23-1) is arranged in the first delivery chamber (6-1) and the second stop piston (23-2) is arranged in the second delivery chamber (6-2).

15. The metering pump (1) according to claim 13 or 14,
**wherein**
the oscillating piston (3) and the stop piston or pistons (23-1, 23-2) can be moved backward and forward in a cylindrical cavity of the housing (2).

16. The metering pump (1) according to one of claims 13 to 15,
**wherein**
the stop piston or pistons (23-1, 23-2) can in each case be moved backward and forward between at least two oppositely oriented stops in the cylindrical cavity of the housing (2).

17. The metering pump (1) according to one of claims 13 to 16,
**wherein**
the metering pump (1) has a hydraulic drive (12) for supplying a hydraulic fluid under pressure and wherein
at least one stop piston (23-1, 23-2) communicates with the hydraulic drive (12) at a first stop piston surface (30-1, 30-2), which lies outside the delivery chamber (6-1, 6-2) assigned to said stop piston (23-1, 23-2), and can be supplied with the hydraulic fluid in such a way that a force that counteracts an enlargement of the associated delivery chamber (6-1, 6-2) is exerted on the stop piston (23-1, 23-2).

18. The metering pump (1) according to one of claims 13 to 17,
**wherein**
at least one stop piston (23-1, 23-2) communicates with the hydraulic drive at a second stop piston surface (28-1, 28-2), which lies outside the delivery chamber (6-1, 6-2) assigned to said stop piston (23-1, 23-2), and can be supplied with the hydraulic fluid in such a way that a force that counteracts a reduction in the size of the associated delivery chamber (6-1, 6-2) is exerted on the stop piston (23-1, 23-2).

19. A metering system for mixing two fluids, having
- a metering pump (1) according to one of claims 12 to 18,
- a first tank (35-1) for the first fluid, which is in fluid communication with the first delivery chamber (6-1) of the metering pump (1) via a first inlet line (16-1), and
- a second tank (35-2) for the second fluid, which is in fluid communication with the second delivery chamber (6-2) of the metering pump (1) via a second inlet line (16-2),
- wherein the outlet line (20) of the first delivery chamber (6-1) and the outlet line (20) of the second delivery chamber (6-2) are combined for metered mixing of the fluids.

## Revendications

1. Pompe de dosage, comprenant :
- un entraînement hydraulique (12) pour fournir un liquide hydraulique sous pression,
- un boîtier (2),
- un piston pendulaire (3) qui est reçu dans le boîtier (2) de telle sorte qu'au moins une première et une deuxième chambre hydraulique (9-1, 9-2) et une première (6-1) et une deuxième chambre de refoulement (6-2) soient formées,
- le piston pendulaire (3), dans la première chambre hydraulique (9-1), présentant au moins une première surface d'entraînement (10-1) et dans la deuxième chambre hydraulique (9-2), présentant au moins une deuxième surface d'entraînement (10-2) et les chambres hydrauliques (9-1, 9-2) communiquant avec l'entraînement hydraulique (12) de telle sorte que le piston pendulaire (3) puisse être déplacé par le liquide hydraulique entre une première et une deuxième position,
- le volume de la première chambre de refoulement (6-1) étant augmenté et le volume de la deuxième chambre de refoulement (6-2) étant réduit lors du déplacement de la première dans la deuxième position, et lors du déplacement de la deuxième dans la première position, le volume de la deuxième chambre de refoulement (6-2) étant augmenté et le volume de la première chambre de refoulement (6-1) étant réduit,
**caractérisée par**
- un dispositif d'ajustement qui est accouplé au piston pendulaire (3) de telle sorte que le déplacement du piston pendulaire (3) puisse être limité de telle sorte que pour au moins l'une des chambres de refoulement (6-1, 6-2), différents volumes minimaux et/ou maximaux puissent être ajustés,
- le dispositif d'ajustement comprenant au moins un piston de butée (23-1, 23-2) qui limite l'espace de la chambre de refoulement (6-1, 6-2) qui est associée au piston de butée (23-1, 23-2).

2. Pompe de dosage (1) selon la revendication 1,
**caractérisée en ce que**
le dispositif d'ajustement comprend deux pistons de butée (23-1, 23-2), le premier piston de butée (23-1) étant disposé dans la première chambre de refoulement (6-1) et le deuxième piston de butée (23-2) étant disposé dans la deuxième chambre de refoulement (6-2).

3. Pompe de dosage (1) selon la revendication 1 ou 2, **caractérisée en ce que**
le piston pendulaire (3) et le ou les pistons de butée (23-1, 23-2) est/sont déplaçables d'avant en arrière dans une cavité cylindrique du boîtier (2).

4. Pompe de dosage (1) selon l'une quelconque des revendications 1 à 3,
**caractérisée en ce que**
le ou les pistons de butée (23-1, 23-2) sont à chaque fois déplaçables d'avant en arrière entre au moins deux butées orientées à l'opposé dans la cavité cylindrique du boîtier (2).

5. Pompe de dosage (1) selon l'une quelconque des revendications 1 à 4,
**caractérisée en ce**
**qu'**au moins un piston de butée (23-1, 23-2), dans le cas d'une première surface de piston de butée (30-1, 30-2), située à l'extérieur de la chambre de refoulement (6-1, 6-2) associée à ce piston de butée (23-1, 23-2), communique avec l'entraînement hydraulique (12) et peut être sollicité avec le fluide hydraulique de telle sorte qu'une force soit exercée sur le piston de butée (23-1, 23-2), laquelle s'oppose à une augmentation de la chambre de refoulement associée (6-1, 6-2).

6. Pompe de dosage (1) selon l'une quelconque des revendications 1 à 5,
**caractérisée en ce qu'**
au moins un piston de butée (23-1, 23-2), dans le cas d'une deuxième surface de piston de butée (30-1, 30-2), qui est située à l'extérieur de la chambre de refoulement (6-1, 6-2) associée à ce piston de butée (23-1, 23-2), communique avec l'entraînement hydraulique et peut être sollicité avec le fluide hydraulique de telle sorte qu'une force soit exercée sur le piston de butée (23-1, 23-2), laquelle s'oppose à une réduction de la chambre de refoulement associée (6-1, 6-2).

7. Pompe de dosage (1) selon l'une quelconque des revendications 1 à 6,
**caractérisée en ce**
**qu'**au moins deux conduites de sortie (21-1, 31-1) sont associées à au moins l'une (6-1) des chambres de refoulement (6-1, 6-2) et en ce qu'au moins deux volumes maximaux différents peuvent être ajustés au moyen du dispositif d'ajustement de telle sorte que dans le cas d'un premier volume maximal, au moins l'une des conduites de sortie (31-1) débouche dans la chambre de refoulement (6-1) et que dans le cas d'un deuxième volume maximal, seulement l'autre (21-1) des deux conduites de sortie (21-1, 31-1) débouche dans la chambre de refoulement (6-1).

8. Système de dosage pour le mélange de deux fluide, comprenant :
- une pompe de dosage (1) selon l'une quelconque des revendications précédentes,
- un premier récipient (35-1) pour le premier fluide, qui est en liaison fluidique par le biais d'une première conduite d'entrée (16-1) avec la première chambre de refoulement (6-1) de la pompe de dosage (1), et
- un deuxième récipient (35-2) pour le deuxième fluide, qui est en liaison fluidique par le biais d'une deuxième conduite d'entrée (16-2) avec la deuxième chambre de refoulement (6-2) de la pompe de dosage (1),
- la conduite de sortie (20) de la première chambre de refoulement (6-1) et la conduite de sortie (20) de la deuxième chambre de refoulement (6-2) étant réunies pour le mélange dosé des fluides.

9. Système de dosage pour le dosage d'au moins un fluide, comprenant
- une pompe de dosage (1) selon la revendication 7,
- au moins un récipient (15) pour le fluide à doser,
- le récipient (15) étant en liaison fluidique par le biais d'une conduite d'entrée (16) avec la première et la deuxième chambre de refoulement (6-1, 6-2) de la pompe de dosage (1),
- l'autre (21-1) des deux conduites de sortie (21-1, 31-1) de la première chambre de refoulement (6-1) étant une conduite de dosage (20) pour le dosage du fluide et
- l'une (31-1) des deux conduites de sortie (21-1, 31-1) de la première chambre de refoulement (6-1) étant en liaison fluidique avec le récipient (15), de telle sorte que du fluide puisse être repompé dans le récipient (16) par le biais de ladite conduite de sortie (31-1) pour la circulation du fluide se trouvant dans le récipient (15).

10. Système de dosage selon la revendication 9,
**caractérisé en ce**
**qu'**au moins deux volumes maximaux différents peuvent être ajustés au moyen du dispositif d'ajustement de telle sorte que dans le cas d'un premier volume maximal, les deux conduites de sortie (21-1, 31-1) débouchent dans la première chambre de refoulement (6-1) et que dans le cas d'un deuxième volume maximal, seule l'autre (21-1) des deux conduites de sortie (21-1, 31-1) débouche dans la première chambre de refoulement (6-1).

11. Système de dosage selon la revendication 9 ou 10, **caractérisé en ce que**
une première soupape (32-1) est disposée dans ladite une conduite de sortie (31-1) et une deuxième soupape (22-1) est disposée dans l'autre conduite de sortie (21-1) et **en ce que** la pression d'ouverture de la deuxième soupape (22-1) est supérieure à la pression d'ouverture de la première soupape (32-1).

12. Pompe de dosage (1), comprenant
- un boîtier (2),
- un piston pendulaire (3) qui est reçu dans le boîtier (2) de telle sorte qu'une première (6-1) et une deuxième chambre de refoulement (6-2) soient formées, et
- un entraînement (12) qui est accouplé au piston pendulaire (3) de telle sorte qu'avec l'entraînement (12), le piston pendulaire (3) puisse être déplacé d'avant en arrière entre une première et une deuxième position, le volume de la première chambre de refoulement (6-1) étant augmenté et le volume de la deuxième chambre de refoulement (6-2) étant réduit lors du déplacement de la première dans la deuxième position, et lors du déplacement de la deuxième dans la première position, le volume de la deuxième chambre de refoulement (6-2) étant augmenté et le volume de la première chambre de refoulement (6-1) étant réduit,
**caractérisée en ce que**
- la pompe de dosage (1) présente un dispositif d'ajustement qui est accouplé au piston pendulaire (3) de telle sorte que le déplacement du piston pendulaire (3) puisse être limité de telle sorte que pour au moins une première (6-1) des chambres de refoulement (6-1, 6-2), différents volumes minimaux et/ou maximaux puissent être ajustés,
- au moins deux conduites de sortie (21-1, 31-1) sont associées à au moins la première chambre de refoulement (6-1) et
- au moins deux volumes maximaux différents peuvent être ajustés au moyen du dispositif d'ajustement de telle sorte que dans le cas d'un premier volume maximal, au moins l'une des conduites de sortie (31-1) débouche dans la première chambre de refoulement (6-1) et dans le cas d'un deuxième volume maximal, seulement l'autre (21-1) des deux conduites de sortie (21-1, 31-1) débouche dans la chambre de refoulement (6-1).

13. Pompe de dosage (1) selon la revendication 12, **caractérisée en ce que**
le dispositif d'ajustement comprend un piston de butée (23-1) qui limite le volume de la première chambre de refoulement (6-1) qui est associée au piston de butée (23-1).

14. Pompe de dosage (1) selon la revendication 12 ou 13,
**caractérisée en ce que**
le dispositif d'ajustement comprend deux pistons de butée (23-1, 23-2), le premier piston de butée (23-1) étant disposé dans la première chambre de refoulement (6-1) et le deuxième piston de butée (23-2) étant disposé dans la deuxième chambre de refoulement (6-2).

15. Pompe de dosage (1) selon la revendication 13 ou 14,
**caractérisée en ce que**
le piston pendulaire (3) et le ou les pistons de butée (23-1, 23-2) est/sont déplaçables d'avant en arrière dans une cavité cylindrique du boîtier (2).

16. Pompe de dosage (1) selon l'une quelconque des revendications 13 à 15,
**caractérisée en ce que** le ou les pistons de butée (23-1, 23-2) sont à chaque fois déplaçables d'avant en arrière entre au moins deux butées orientées à l'opposé dans la cavité cylindrique du boîtier (2).

17. Pompe de dosage (1) selon l'une quelconque des revendications 13 à 16,
**caractérisée en ce que**
la pompe de dosage (1) présente un entraînement hydraulique (12) pour fournir un liquide hydraulique sous pression et **en ce qu'**au moins un piston de butée (23-1, 23-2), dans le cas d'une première surface de piston de butée (30-1, 30-2), située à l'extérieur de la chambre de refoulement (6-1, 6-2) associée à ce piston de butée (23-1, 23-2), communique avec l'entraînement hydraulique (12) et peut être sollicité avec le fluide hydraulique de telle sorte qu'une force soit exercée sur le piston de butée (23-1, 23-2), laquelle s'oppose à une augmentation de la chambre de refoulement associée (6-1, 6-2).

18. Pompe de dosage (1) selon l'une quelconque des revendications 13 à 17,
**caractérisée en ce**
**qu'**au moins un piston de butée (23-1, 23-2), dans le cas d'une deuxième surface de piston de butée (28-1, 28-2), qui est située à l'extérieur de la chambre de refoulement (6-1, 6-2) associée à ce piston de butée (23-1, 23-2), communique avec l'entraînement hydraulique et peut être sollicité avec le fluide hydraulique de telle sorte qu'une force soit exercée sur le piston de butée (23-1, 23-2), laquelle s'oppose à une réduction de la chambre de refoulement associée (6-1, 6-2).

19. Système de dosage pour mélanger deux fluides, comprenant
- une pompe de dosage (1) selon l'une quelconque des revendications 12 à 18,
- un premier récipient (35-1) pour le premier fluide, qui est en liaison fluidique par le biais d'une première conduite d'entrée (16-1) avec la première chambre de refoulement (6-1) de la pompe de dosage (1), et
- un deuxième récipient (35-2) pour le deuxième fluide, qui est en liaison fluidique par le biais d'une deuxième conduite d'entrée (16-2) avec la deuxième chambre de refoulement (6-2) de la pompe de dosage (1),
- la conduite de sortie (20) de la première chambre de refoulement (6-1) et la conduite de sortie (20) de la deuxième chambre de refoulement (6-2) étant réunies pour le mélange dosé des fluides.
